# EUROPEAN PATENT SPECIFICATION

(11) **EP 4 488 192 B1**
(45) Date of publication and mention of the grant of the patent: **13.05.2026**
(21) Application number: 23183138.9
(22) Date of filing: 03.07.2023
(51) Int. Cl.: B65D 39/00, B65D 47/10, B65D 55/16, B65D 75/58, B29C 45/00

(54) **A CLOSURE ASSEMBLY AND CONTAINER PROVIDED WITH SUCH A CLOSURE ASSEMBLY**
VERSCHLUSSANORDNUNG UND BEHÄLTER MIT SOLCH EINER VERSCHLUSSANORDNUNG
ENSEMBLE DE FERMETURE ET RÉCIPIENT DOTÉ D'UN TEL ENSEMBLE DE FERMETURE

(43) Date of publication of application: 08.01.2025
(73) Proprietor: SIG Services AG, 8212 Neuhausen am Rheinfall (CH)
(72) Inventor: VAN DER MOLEN, Peter-Jan, 8212 NEUHAUSEN AM RHEINFALL (CH)
(74) Representative: EP&C

(56) References cited:
- WO-A1-2019/158986
- CH-A- 409 668
- DE-A1- 102007 011 929
- KR-A- 20100 136 175

## Description

A first aspect of the present invention relates to a closure assembly according to the preamble of the claim 1 and to a container provided with such a closure assembly, e.g. the container being filled with a product to be dispensed via the closure assembly. For example, the container is a collapsible pouch container or a carton.

The closure assembly comprises a monolithic fitment which is made, e.g. injection moulded, of plastic material, and comprises a base portion which is configured to be secured or is secured to a container body, a tubular neck around a product passage, which tubular neck extends from the base portion along a main axis of the closure assembly and forms a mouth at a top end of the tubular neck allowing for dispensing of product from the container body, as well as a plug which is integrally made to the top end of the tubular neck. The plug has a seal portion and the plug is connected via a frangible peripheral connection to the neck so as to close the product passage.

The closure assembly further comprises a cap body which is made, e.g. injection moulded, of plastic material. The cap body has a skirt portion defining an open-ends bore extending from a lower opening at a lower end of the cap body to an upper opening at an upper end of the cap body. The cap body has at least one wing portion which extends outwardly from the skirt portion.

In the closure assembly, the cap body is mounted over the tubular neck and over the plug such that the plug is located in the bore at or near the upper end of the cap body and the skirt portion extends about the tubular neck. The plug and the cap body are provided with cooperating locking formations configured to lock the plug and cap body in axial and rotational directions relative to one another.

The closure assembly is configured to allow for a first-time opening by the user engaging the cap body and causing the frangible peripheral connection to break so that the plug and the cap body then form a cap part and so that the product passage is opened. The cap part can be replaced by the user over the tubular neck into a reclosing position thereof, wherein the seal portion of the plug is introduced into a top section of the tubular neck and sealingly engages the tubular neck so as to close the product passage.

An example of a closure assembly according to the preamble of claim 1 is disclosed in DE 10 2007 011 929. In this document, it is explained that the closure assembly is produced by injection moulding a monolithic component of plastic material, which monolithic component is composed of both the fitment and the cap body having two diametrically opposed wing portions. Herein the lower end of the cap body is integrally connected to the plug via a frangible connection and the cap body extends away from the plug along the main axis in a direction opposite from the tubular neck. The component is subsequently subjected to an axial compression action wherein the cap body is forced towards the base portion of the fitment in such a manner that the frangible peripheral connection between the neck and the plug remains intact and the frangible connection between the plug and the cap body is broken. In this action a circumferential rib of the plug having a multitude of fine teeth is snapped into a circumferential groove of the bore, which groove is provided with mating fine teeth. Hereby, the plug and the cap body are locked to one another in both rotational and axial directions. In this state, the closure assembly is secured to the container, so that the user will engage the wing portions of the cap body and twist it, causing the frangible peripheral connection to break so that the product passage is opened. Herein, the cap body and the plug together become a cap part, which cap part is replaceable by the user over the tubular neck into a reclosing position thereof, wherein the sealing portion of the plug is introduced into a top section of the tubular neck and sealingly engages the tubular neck so as to close the product passage.

The known closure assembly is not satisfactory, for example in view of a desire to produce this type of closure assembly with a small diameter of the tubular neck. Also, the prior art closure assembly will in practice have to be produced from a relatively hard plastic material, e.g. a high-density polyethylene (HDPE) or polypropylene (PP), whereas recycling technologies prefer or demand that the closure assembly is made from other plastic materials, e.g. like low-density polyethylene (LDPE). For example, this is desired in case the container is also made (in part, or in majority, or entirely) of such material.

The first aspect of the invention provides a closure assembly according to the preamble of claim 1, which is characterized in that the skirt portion of the cap body has an outwardly protruding longitudinal rib extending parallel to the main axis,
wherein the bore of the cap body comprises a longitudinal groove extending parallel to the main axis, wherein the longitudinal groove is partially located within the longitudinal rib, wherein the plug has an outwardly projecting tab, the tab being received in the longitudinal groove, the tab and groove cooperating to provide a rotational locking of the plug and cap body,
and wherein the plug and cap body are further provided with cooperating axial locking formations, distinct from the tab and groove, which are configured to lock the plug and cap body in axial directions.

Due to the inventive structure a number of beneficial technical effects are achieved. The presence of the longitudinal rib allows for a reduced wall thickness of the skirt of the cap body as the longitudinal rib provides for a reinforcement of the cap body. The longitudinal rib also allows for the groove to be designed with a significant depth compared to the wall thickness of the skirt, which in turn allow for a robust design of the tab of the plug. For example, the depth can be at least 0.5 times the wall thickness of the skirt portion, wherein a maximum depth is primarily governed by the relevant cross-section of the rib. The first aspect of the invention also creates an optimal load path between the cap body and the plug when the user opens the closure assembly for the first time. Herein, the cooperation between the tab and the groove transmits torque when the user twists the cap body. As the axial locking between the plug and the cap body is done via axial locking formations that are distinct from the tab and groove, the tab need not to absorb axial loads.

In embodiments, the cap body has at least one wing portion, which wing portion extends outwardly from the skirt and is integral with the longitudinal rib. This optimizes transfer of torque from the wing portion to the skirt and to the plug.

In embodiments, the skirt portion of the cap body has two outwardly protruding longitudinal ribs extending parallel to the main axis and diametrically opposite from each other,
wherein the bore of the cap body comprises two diametrically opposed longitudinal grooves extending parallel to the main axis, wherein each longitudinal groove is partially located within a respective one of the two longitudinal ribs,
wherein the plug has two diametrically opposed and outwardly projecting tabs, each tab being received in a respective one of the two longitudinal grooves, the tabs and grooves cooperating to provide a rotational locking of the plug and cap body.

In embodiments, the cap body has two diametrically opposed wing portions which extend outwardly from the cap body, preferably each wing portion being integral with a corresponding one of the longitudinal ribs.

Whilst the cap body may have, in embodiments, just one wing portion, the presence of two diametrically opposed wing portions is preferred, e.g. in view of the user twisting the cap body for opening of the closure assembly. Such a design with two wing portions could be integrated into a design wherein the plug has just one tab and wherein the cap body has just one longitudinal rib and one groove. However, e.g. in view of the optimal transmission of torque from the wing portions to the plug for breaking the frangible peripheral connection, the presence of two tabs and two longitudinal ribs and grooves is preferred. For example, the presence of two wing portions is envisaged for a collapsible pouch container having a top edge, wherein the wing portions extend in a common plane with the top edge.

In embodiments, the one or two wing portions are planar, e.g. located in a vertical plane through the main axis of the closure assembly. In other embodiments, the one or two wing portions are non-planar, e.g. with a thickened rim, a curvature, etc.

In embodiments, the axial locking means are embodied by one or more outwardly projecting snap formations of the plug, distinct from the at least one tab, and one or more complementary snap formations of the cap body so as to provide axial locking of the plug and the cap body. For example, the plug has two diametrically opposed and outwardly projecting snap formations. In a practical embodiment, the two diametrically opposed and outwardly projecting snap formations are arranged perpendicular to the two tabs. For example, the cap body is provided with diametrically opposed windows extending from the bore through the cap body, each receiving a snap formation therein to lock the plug axially.

In practical embodiments, the longitudinal rib extends from the lower edge of the cap body upward, e.g. to the upper end of the cap body, in embodiments merging with a collar portion of the cap body at the upper end of the cap body as discussed herein.

In embodiments, the longitudinal rib(s) each has/have a variation, e.g. stepwise variation, of wall thickness thereof over the length of the rib(s), the wall thickness being greater where the plug is received than in a lower section of the cap body, e.g. at the lower end of the cap body. This allows to minimize the use of plastic material, without undue loss of strength of the cap body. Also, as will be explained here, a greater flexibility of the cap body at its lower end compared to where the plug is located can be beneficial for the production of the closure assembly.

In embodiments, the cap body is provided with an outwardly protruding collar portion merging with the at least one longitudinal rib, e.g. with both ribs. The collar portion locally strengthens the cap body, e.g. the collar portion being located where the plug is locked to the cap body, and/or where the wing portion(s) adjoins the longitudinal rib(s) improving the torque transfer.

For example, the one or more complementary snap formations of the cap body are embodied as one or more windows extending from the bore through the collar portion of the cap body, a corresponding snap formation of the plug being received in each window. For example, the plug has two diametrically opposed and outwardly projecting snap formations and the cap body is provided with diametrically opposed windows extending from the bore through the collar portion of the cap body.

In embodiments, the plug has a transverse wall portion, wherein the seal portion is an annular seal portion projecting downward from the transverse wall portion, and wherein the plug further has an annular top wall portion projecting upward from the transverse wall portion. The frangible peripheral connection herein adjoins a lower edge of the annular seal portion of the plug. Due to this design of the plug, the seal portion can provide optimal sealing effect upon reclosing of the assembly, e.g. when construed with a small diameter. For example, the annular top wall portion adjoins a periphery of the transverse wall portion and the annular seal portion has a smaller horizontal cross-section than the transverse wall portion and the annular top wall portion.

In embodiments, each tab adjoins the top wall portion of the plug.

In embodiments, each tab has a tab portion which protrudes downward relative to the transverse wall portion of the plug and is spaced from the annular seal portion of the plug.

In embodiments, each tab has an upper edge which is in a plane common with an upper edge of the top wall portion of the plug.

In embodiments, the transversal wall is planar or has a dome in an upward direction.

In embodiments, the cap body has a lower edge defining two diametrically opposed recesses, each recess defining a pair of inclined sides which extend with opposite inclinations from a lowermost face of the cap body upward to an apex of the recess. Herein, the fitment has two diametrically opposed ramp portions, e.g. at or near a lower end of the tubular neck, e.g. protruding upwardly from the base portion. These ramp portions each have inclined sides, wherein the ramp portions and the recesses at the lower edge of the cap body are complementary so that, in the reclosing position of the cap body, each ramp portion is located in a corresponding one of the two recesses. In a practical embodiment, prior to first time opening, the lower end of the cap body is at a level above the ramp portions, so that ramp portions are not within the recesses. Upon the user rotating the cap part in the reclosing position thereof, the cooperating inclined sides of the recesses and of the ramp portions cause a lift action of the cap part relative to the tubular neck which facilitates reopening of the closure assembly, e.g. overcoming a snap connection between the tubular neck and the cap part active in the reclosing position.

It is noted that, in embodiments, the ramp portions could have just one inclined side, so that lift action is only obtained when twisting the cap part in one direction.

In embodiments, the tubular neck is provided with at least one circumferential bead, e.g. two axially spaced circumferential beads, wherein the at least one circumferential bead is configured to engage, e.g. frictionally engage, the cap body internally. These one or more, e.g. two, beads stabilize the cap part relative to the tubular neck. The stabilizing bead(s) may be configured and arranged to guide the cap part during reclosing of the closure assembly in such a manner that the seal portion of plug does not collide with the top end of the neck. Such a collision would cause an axial load on the plug, and in particular on the axial locking thereof to the cap body, which would then require increased dimensions of the axial locking formations to absorb this extra load. As explained herein, it is advantageous to have small dimensions of the snap formations of the plug, e.g. in view of entry into the bore during the axial compression action.

In embodiments, the cap part and the tubular neck are configured to provide a snap joint when the cap part is in the reclosing position thereof, e.g. only in the reclosing position thereof. For example, the cap body is provided with a snap formation protruding inward into the bore, e.g. an inward snap bead. For example, the inside of the skirt is provided with a snap formation that cooperates with a stabilizing bead as discussed herein, e.g. configured to snap under the stabilizing bead, e.g. under a lower stabilizing bead if multiple beads are provided on the neck.

In a preferred embodiment, the snap joint holding the cap part on the fitment in the reclosing position is formed by remnants of the frangible peripheral connection on the tubular neck forming a snap joint with the plug, for example with the annular seal portion of the plug. This use of the remnants of the frangible peripheral connection, with in practice may form a snap rim extending inwardly of the top end of the neck, avoids the need for another snap formation to be formed on the neck.

In embodiments, the closure assembly further comprises an integrated strap which is made, e.g. moulded, integrally with the fitment and with the cap body as one piece of a plastic material. The strap has a first end connected to the fitment and a second end connected to the cap body, wherein the strap is configured to keep the cap part connected to the fitment after first-time opening of the closure assembly. For example, the first end is connected to the base portion of the fitment, remote from the tubular neck. For example, the second end of the strap is connected to a wing portion of the cap body. For example, the strap connects the base portion to a wing portion. In an embodiment with a single wing portion and two longitudinal ribs as well as a corresponding design of the plug, the wing portion adjoins one of the longitudinal ribs and the strap connects to the other longitudinal rib.

In practical embodiments, the closure assembly has a single one integrated strap. In another embodiments, two straps are present between the fitment and the cap body, each on a respective side of the cap body.

In embodiments, the strap is an articulated strap comprising multiple strap segments, in practical embodiments straight strap segments, which are joined in series by one or more hinges. This designs allows for the strap to be folded, e.g. during a step of the production process wherein the cap body is moved over the plug and the tubular neck.

In embodiments, the strap is an articulated strap comprising a first strap segment joined to the fitment e.g. to the base portion, via a first hinge, a second strap segment joined to the first strap segment via a second hinge, a third strap segment joined to the second strap segment via a third hinge, and the third strap segment being joined to the cap body via a fourth hinge, wherein the hinges define parallel hinge axes. This articulated design allows for effective folding during the production step of the assembly wherein the cap body is moved over the plug and the tubular, e.g. in case the cap body is initially integrally moulded, e.g. injection moulded, with the fitment and the plug. In a preferred embodiment, the strap is configured such that, in the reclosing position of the cap part, the first strap segment extends parallel to the main axis, the second strap segment extends perpendicular to the main axis away from the cap body, and the third strap segment extends along the second strap segment, e.g. parallel to the second strap segment. In practical embodiments, the first hinge allows for the pivoting of the first strap segment away from the neck, so as to move the cap part as far away as possible.

In embodiments, the base portion of the fitment is embodied with a seal boat portion adapted to be secured or secured, e.g. by means of heat sealing technology, between opposed film walls of a collapsible pouch container. For example, the seal boat portion is to be secured or secured between the film walls in a top edge of the pouch container, preferably the wing portion(s) extending in a plane common with the top edge.

In other embodiments, the base portion of the fitment is embodied with a lower circumferential flange portion adapted to be secured or secured to a panel of a container, for example a panel of a carton or to a wall of a collapsible pouch. For example, the flange portion is to be heat sealed to the panel.

In embodiments, the fitment and plug, preferably also together with the cap body, are injection moulded from polyethylene. The plastic material could be biodegradable and/or made (in part) of recycled plastic.

In embodiments, the tubular neck defines a product passage with a diameter of between 2.0 and 5.0 millimetres, e.g. about 3 millimeters, yet larger inner diameters of the neck are also contemplated.

The plastic fitment and cap body, and preferably also the strap, of the closure assembly are preferably made by injection moulding, most preferably by moulding a monolithic component as will be discussed herein. If no strap is provided, the fitment and cap body could be moulded separately and then assembled, if desired. 3D-printing could be an alternative, yet not at high production rates.

The first aspect of the invention also relates to a container provided with a closure assembly as described herein, e.g. a collapsible pouch container or a carton.

The first aspect of the invention also relates to a method for production of a closure assembly according to any one or more of the claims 1-11, in which method:
- a monolithic component is made, e.g. injection moulded, of plastic material, which monolithic component is composed of both the fitment and the cap body, wherein the lower end of the cap body is integrally connected to the plug via one or more breakable bridges and the cap body extends away from the plug along the main axis opposite the tubular neck, wherein the component is subsequently subjected to an axial compression action wherein the cap body is forced towards the base portion of the fitment in such that the frangible peripheral connection remains intact and the one or more breakable bridges are broken, and wherein, in the axial compression action, the at least one tab of the plug enters into the longitudinal groove and slides through the groove until the plug is located in the bore at or near the upper end of the cap body and the axial locking formations cooperate to lock the plug and cap body in axial directions.

In embodiments of the method, the monolithic component is embodied such that a breakable bridge is provided in proximity of each tab, e.g. two breakable bridges on opposite side of a tab, on the one hand and the lower end of the cap body on the other hand. Hereby the tab(s) are accurately aligned with the lower end of the longitudinal groove in which the tab slides during axial compression action.

In embodiments, the plug has a top end face that is located, after completion of the compression action, within the bore of the cap body at a distance below the upper opening of the bore. This design is of particular benefit, when the breakable bridges initially connecting the plug to the lower end of the cap body protrude above the top face of the plug and are located below the upper opening of the bore when the compression action is completed.

In embodiments, the plug and cap body are dimensioned to have an interference fit, preferably only upon completion of the compression action. Therefore, the plug may first slide rather easily through the bore, with the interference fit becoming active when the final position in the bore is reached. For example, the tab(s) is/are dimensioned to have an interference fit with the groove(s), e.g. only the lower ends of the tabs having an interference fit dimension relative to the groove. For example, the plug has a circumferential portion(s) that has an interference fit with the bore in the final position of the plug.

In a preferred embodiment of the method, the monolithic component is made by injection molding in an injection mold, wherein the axial compression action is performed prior to the closure assembly being ejected from the injection mould. This approach allows for a high production rate of the closure assembly and avoids the need for an additional robotized assembly process remote from the injection moulding wherein the cap body is slid over the plug and the tubular neck.

In an embodiment of the method, wherein the plug has a transverse wall portion and an annular seal portion projects downward from the transverse wall portion, and wherein the frangible peripheral connection adjoins the lower edge of the annular seal portion the injection mould, preferably, has an inner core part that defines the product passage through the tubular neck as well as the adjoining inner hollow of the annular seal portion. During the "on-mould" compression action, this core part may be used to effectively support the plug so that the peripheral connection remains intact. This support may also be in rotational direction, countering any twisting of the plug relative to the neck during the compression action.

In embodiments of the method, the cap body has a lower edge defining two diametrically opposed recesses, each recess defining a pair of inclined sides which extend with opposite inclinations from a lowermost face of the cap body upward to an apex of the recess, and the plug has two diametrically opposed and outwardly projecting snap formations, e.g. perpendicular to the two diametrically opposed tabs in an embodiment when present. These snap formations are each axially aligned with a corresponding recess. For example, the cap body is provided with diametrically opposed windows extending from the bore through the cap body. It is envisaged that during the axial compression action in the production of the closure assembly, each snap formation enters into a corresponding recess and starts to contact the inclined sides thereof. This contact causes the inclined sides to elastically flex outward so that the snap formation on the plug gradually enters into the bore of the cap body. This design reduces the load on the snap formation during the axial compression step, for example avoiding shearing and/or other damage to the snap formation.

In embodiments, the snap formations on the plug each have a top with a top face and chamfered side faces on either side of the top face. The chamfered side faces facilitate the interaction with the inclined sides of the recess so as to effectively widen the lower end of the cap body for entry of the plug into the bore. For example, the inclination of the chamfered side faces is the same or similar to the inclination of the inclined side of the recess. As preferred, in practical embodiments, the top face of the snap formations extends perpendicular to the main axis, so as to optimize fixation of the plug in the bore.

It is noted that the provision of the two longitudinal grooves for the tabs of the plug as discussed herein, may also be beneficial for entry of the plug with outward projecting snap formations into the bore of the cap body. The grooves effectively render the cap body more flexible in view of entry of the plug with the snap formations into the bore, in the compression action, compared to a design lacking the grooves and having a bore with a closed circular cross-section. The enhanced flexibility reduces the loads on the snap formations during entry into the bore. This effect can be enhanced by the measure of having a reduced wall thickness of the ribs in a lower section and a thicker wall thickness in an upper section of the ribs, so that the ribs is stiffer in the upper section where the plug becomes locked to the cap body.

As preferred, the fitment has two diametrically opposed ramp portions, e.g. at or near a lower end of the tubular neck, e.g. protruding upwardly from the base portion, which ramp portions each have inclined sides, wherein the ramp portions and the recesses at the lower edge of the cap body are complementary so that, in the reclosing position of the cap body, each ramp portion is located in a corresponding one of the two recesses, and wherein, upon the user rotating the cap part in the reclosing position thereof, the cooperating inclined sides of the recesses and of the ramp portions cause a lift action of the cap part relative to the tubular neck.

In an embodiment of the method, the monolithic component is made with an integrated strap which is made, e.g. moulded, integrally with the fitment and with the cap body as one piece of a plastic material, which strap has a first end connected to the fitment and a second end connected to the cap body, which strap is configured to keep the cap part connected to the fitment after first-time opening of the closure assembly. In an embodiment, the strap is an articulated strap comprising multiple strap segments joined in series by one or more hinges, wherein the strap is folded due to the compression action as strap segments fold about the one or more hinges. For example, the first strap segment extends parallel to the main axis, the second strap segment extends perpendicular to the main axis away from the cap body, and the third strap segment extends along the second strap segment after completion of the compression action.

In the drawings:
- fig. 1 shows an injection moulded monolithic plastic component prior to a compression action in the course of a method according to the invention to produce a closure assembly according to the invention,
- fig. 2 shows the component of figure 1 from a different angle,
- fig. 3 shows the component of figure 1 from yet another angle,
- fig. 4 shows a vertical cross-section of the component of figure 1,
- fig. 5 shows on a larger scale a detail of the component of figure 1,
- fig. 6 shows the component of figure 1 from below at an angle,
- fig. 7 shows the component of figure 1 from above at an angle,
- fig. 8 shows a vertical cross-section of the closure assembly obtained after subjecting the component of figure 1 to the compression action in the course of a method according to the invention to produce the closure assembly,
- fig. 9 shows the closure assembly of figure 8 in a perspective view,
- fig. 10 shows the closure assembly of figure 9 from another angle,
- fig. 11 shows the closure assembly after first-time opening by a user,
- fig. 12 shows the closure assembly of figure 11 from another angle,
- fig. 13 shows the closure assembly of figures 8 - 11 when reclosed,
- fig. 14 shows the reclosed closure assembly of figure 13 in vertical cross-section.

In the following description of the figures both the production methods and closure assemblies according to the invention will be discussed with reference to an example. First a general overview is presented and then details are discussed.

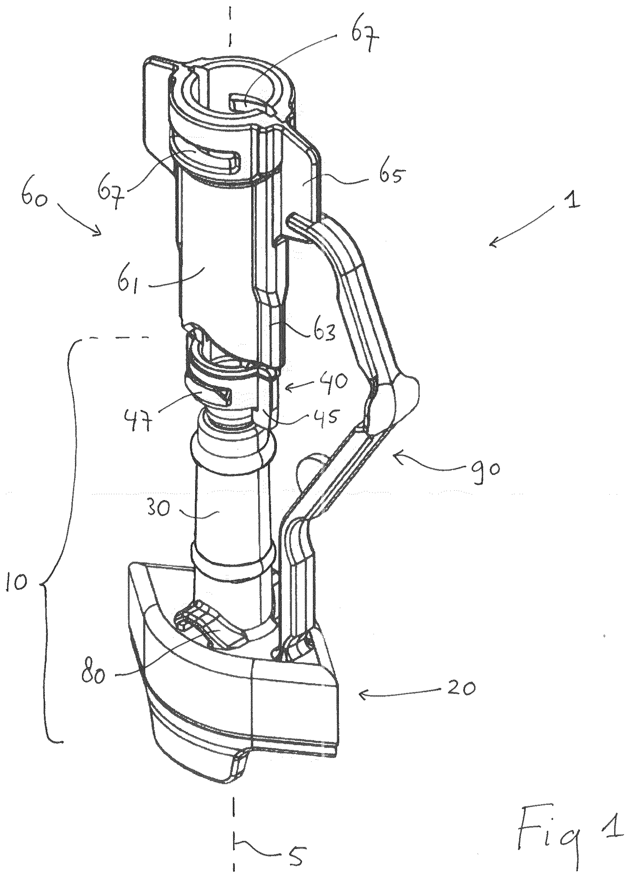

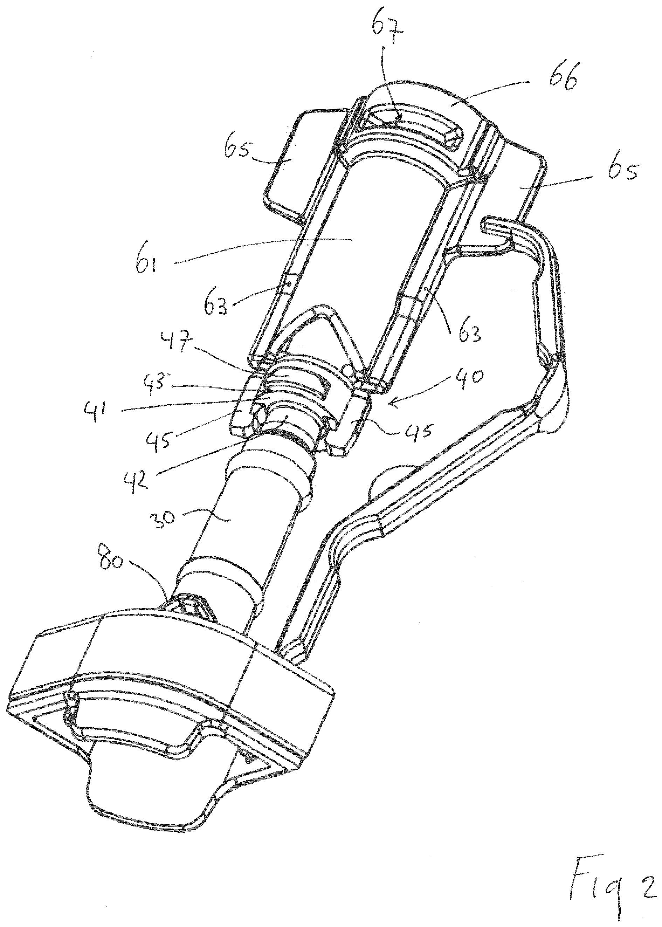

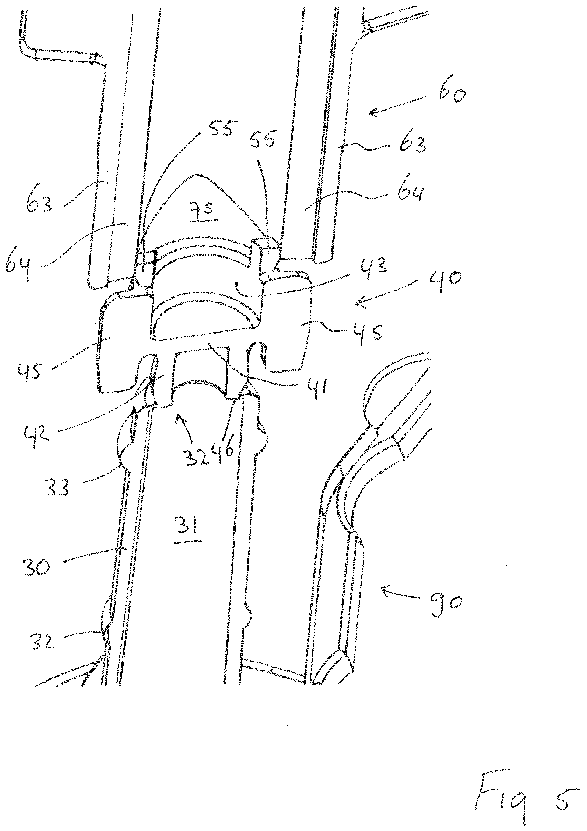

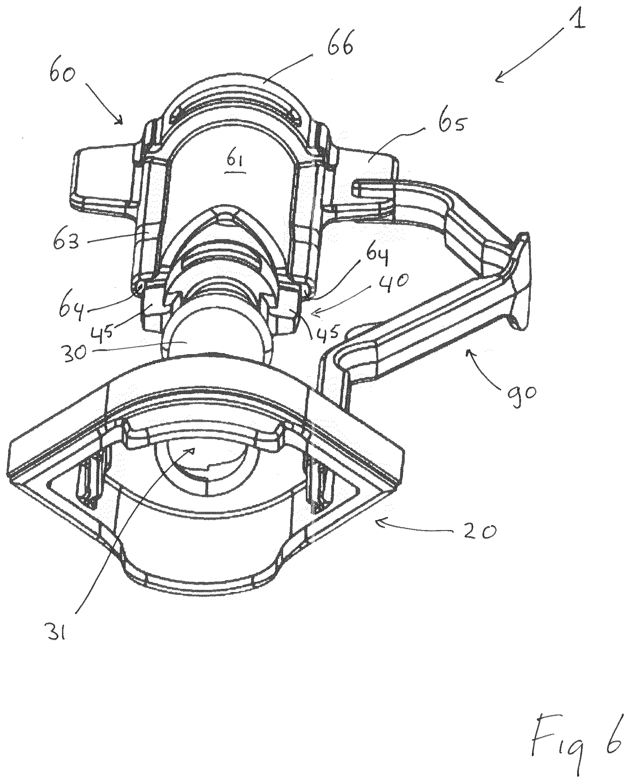

The figures 1 - 7 illustrate an example of the monolithic component 1 which has been made of plastic material, e.g. polyethylene, e.g. low-density polyethylene, by injection moulding in a corresponding mould. In practical embodiments, in view of mass production, a mould will have a multitude of mould cavities, each cavity defining one component 1.

Generally, the monolithic component 1 is composed of a fitment 10 and a cap body 60.

The fitment 10 comprises:
- a base portion 20 which is configured to be secured to a container body,
- a tubular neck 30 around a product passage 31, which tubular neck extends from the base portion along a main axis 5 and forms a mouth 32 at a top end of the tubular neck allowing for dispensing of product from the container body,
- a plug 40 which is integrally moulded to the top end of the tubular neck, wherein the plug has a seal portion 41, and wherein the plug is connected via a frangible peripheral connection 46 to the top end of the neck 30 so as to close the product passage 31.

The lower end of the cap body 60 is integrally connected to the plug 40 via breakable bridges 55.

In the component 1, the cap body 60 extends away from the plug 40 along the main axis 5 opposite the tubular neck 30.

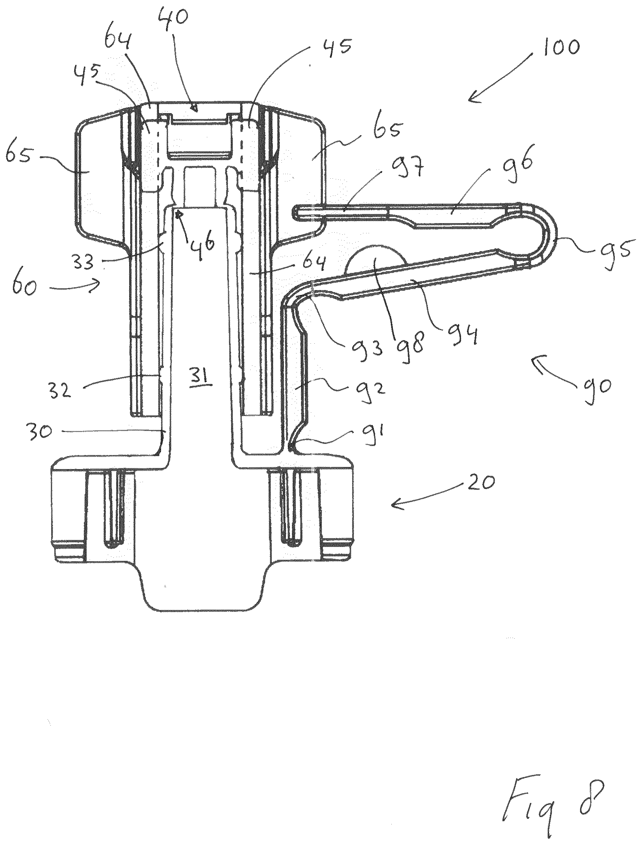

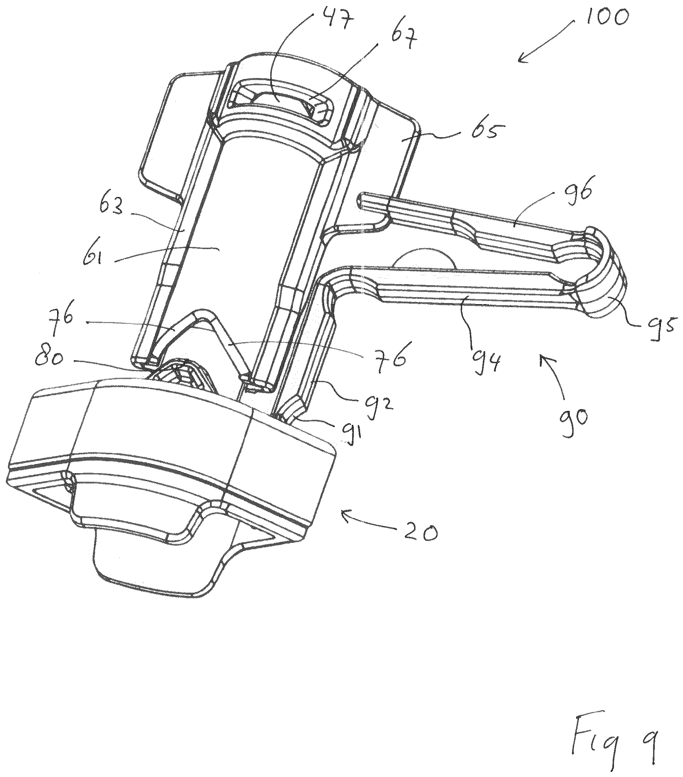

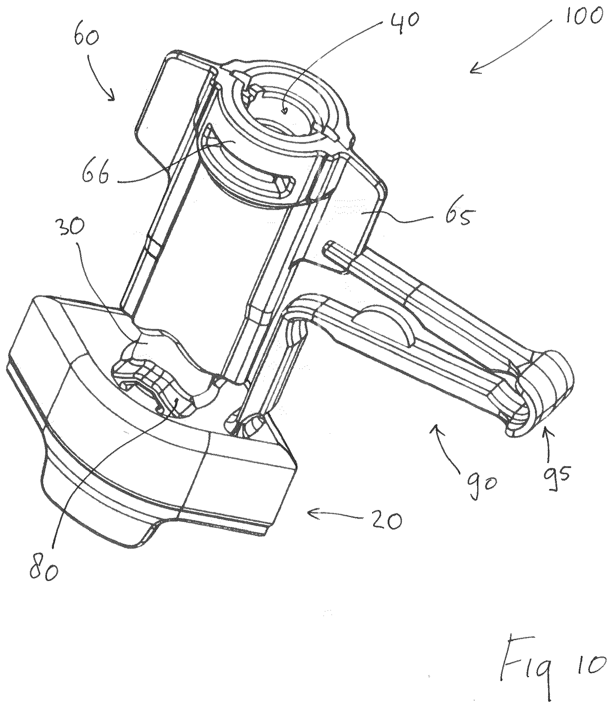

In order to turn the injection moulded component 1 into a closure assembly 100 that is ready to be secured to a container body, the moulded component 1 is subjected to an axial compression action, preferably prior to the component turned into the closure assembly being ejected from the mould. In this action, the cap body 60 is forced towards the base portion 20 of the fitment 10 in such a manner that the frangible peripheral connection 46 remains intact and the breakable bridges 55 are broken. The result is the closure assembly 100 as illustrated in figures 8 - 10.

Performing the axial compression before ejection from the mould, allows for a high production rate of the closure assembly 100 and avoids the need for an additional robotized assembly process remote from the injection moulding wherein the cap body is slid over the plug and the tubular neck.

The base portion 20 of the fitment is embodied here as a seal boat portion which is adapted to be secured between opposed film walls of a collapsible pouch container as is known in the art, e.g. in a top seam of the pouch, e.g. by a (heat) sealing technique as is known in the art . This closure assembly 100 is then secured to the collapsible pouch container.

The container is filled with a product, e.g. via an opening that is closed as the closure assembly is secured or via another opening remote from the closure assembly, which opening is then closed.

In this filled state of the container with the closure assembly 100 secured thereon, the frangible peripheral connection 46 is still intact between the tubular neck 30 and the plug 40 which guarantees the hermetic closing of the product passage 31.

A user can open the closure assembly 100 of the container as a first-time opening in order to discharge the product from the container by gripping the cap body 60, e.g. wing portions thereof, and applying a suitable force, for example a torsional force to twist the cap body 60. This causes the frangible peripheral connection 46 to fail so that the cap part 70 formed by the cap body 60 and plug 40 locked together is released from the tubular neck 30, yet still connected to the base portion by a strap 90.

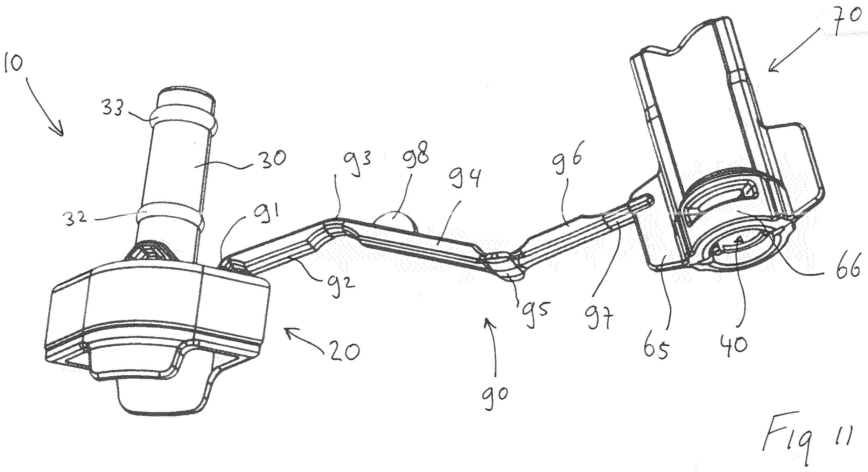

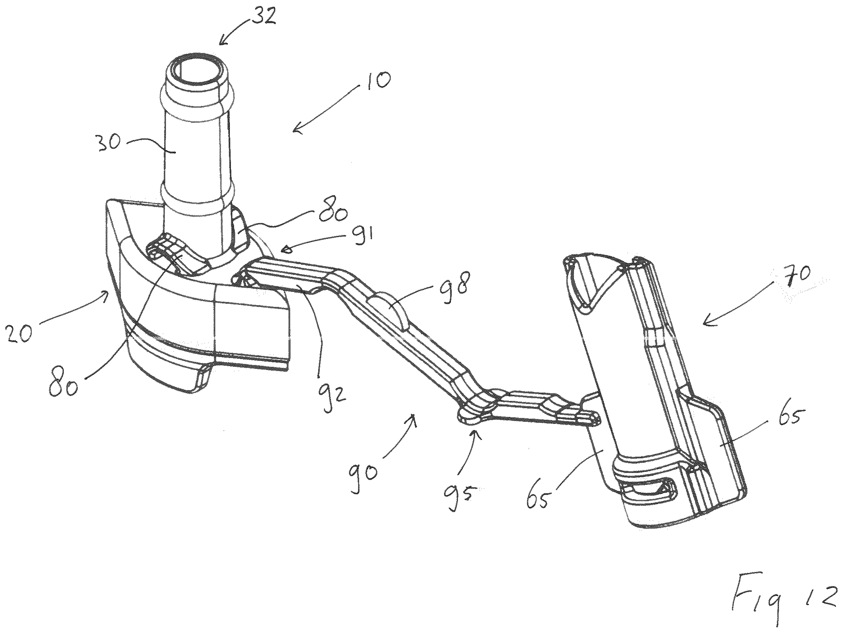

The user can move the cap part 70 away from the tubular neck 30 by stretching the strap 90 into the configuration as shown in figures 11 and 12, e.g. allowing to discharge the product without interference of the cap part 70, e.g. allowing the user to drink from the container when the product is a beverage or other drinkable food product, e.g. yogurt.

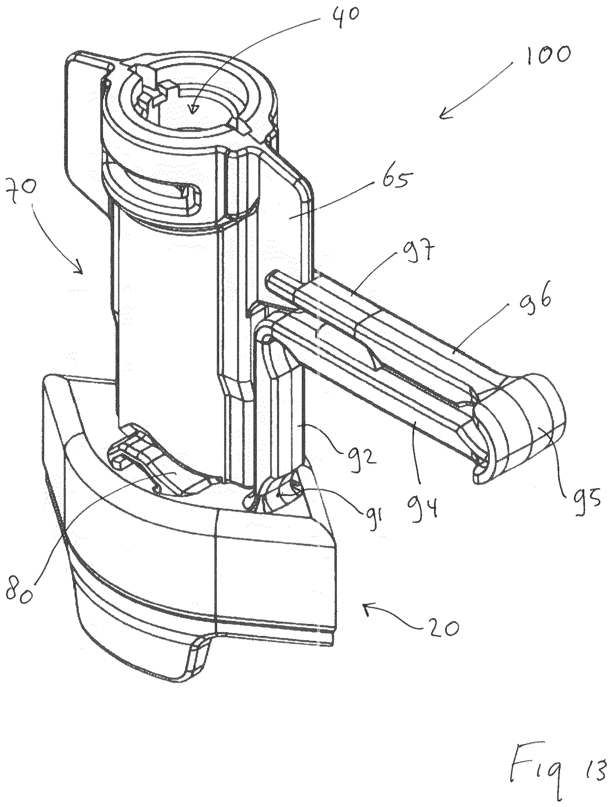

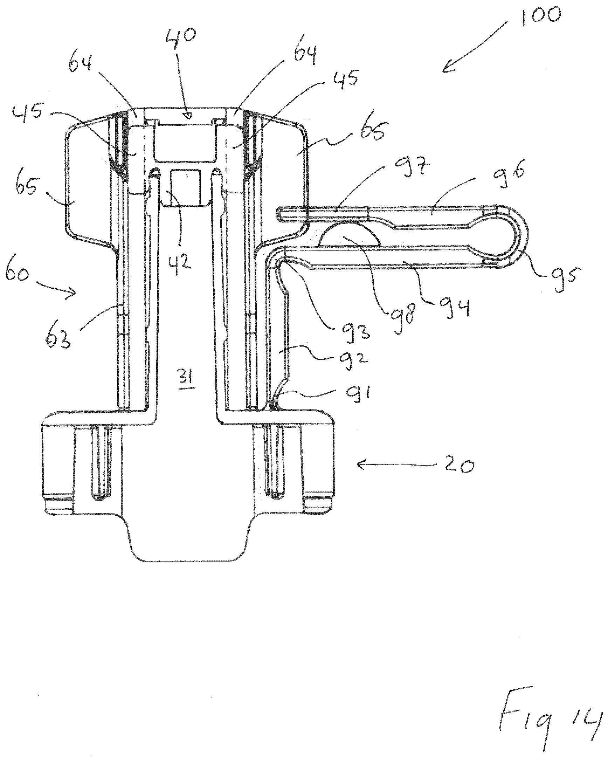

The user can reclose the closure assembly 100 by placing the cap part 70 back over the tubular neck 30 as is illustrated in figures 13 and 14. Herein, the seal portion of the plug 40 is introduced into the top section of the tubular neck 30 to seal the product passage 31 in this reclosing position.

The cap body 60 has a skirt portion 61 defining an open-ends bore 62 which extends from a lower opening at a lower end of the cap body to an upper opening at an upper end of the cap body.

As a result of the compression action, the cap body 60 breaks free from the plug 40 and becomes mounted over the tubular neck 30 and the plug 40 such that the plug 40 is located in the bore, here near the upper end of the cap body, and the skirt portion 61 extends about the tubular neck 30.

Generally, plug 40 and the cap body 60 are provided with cooperating locking formations configured to lock the plug and cap body in both axial and rotational directions.

In a practical exemplary embodiment, as shown here, the component 1 has a height of about 45 millimeters. The tubular neck 30 has a height of about 15 millimeters, an outer diameter of about 4.5 millimeters and a product passage 31 therein with a diameter of about 3 millimeters. The cap body 60 has a height of about 17 millimeters and the bore 62 therein a diameter of about 5 millimeters. For example, the component 1 weighs about 0.7 grammes. Whilst these dimensions are meant as a mere example only, they may facilitate understand the various aspects and related effects/benefits of the present invention.

The structure of the exemplary embodiment of the component 1 and of the closure assembly 100 into which it is made by performing the compression action, will now be discussed in more detail.

The cap body 60 has two diametrically opposed wing portions 65 which extend outwardly from the skirt portion 61 of the cap body.

In this example, the wing portions 65 are planar and extend in a vertical plane through the main axis 5 of the closure assembly.

In this example, the wing portions 65 have a height of 8 millimeters and a length of 3 millimeters in radial direction.

The skirt portion 61 has two outwardly protruding longitudinal ribs 63 extending parallel to the main axis 5 and diametrically opposite from each other. Each wing portion 65 is integral with a corresponding longitudinal rib 63.

The bore 62 of the cap body comprises two diametrically opposed longitudinal grooves 64 extending parallel to the main axis 5 and each of the longitudinal grooves 64 is partially located within a respective one of the two longitudinal ribs 63.

The plug 40 has two diametrically opposed and outwardly projecting tabs 45.

As shown, the component 1 is embodied such that a breakable bridge 55 is provided in proximity of each tab 45, here two breakable bridges on opposite side of a tab 45, on the one hand and the lower end of the cap body 60 on the other hand. Hereby the tabs are accurately aligned with the lower end of the longitudinal groove 64 in which the tab slides during the axial compression action.

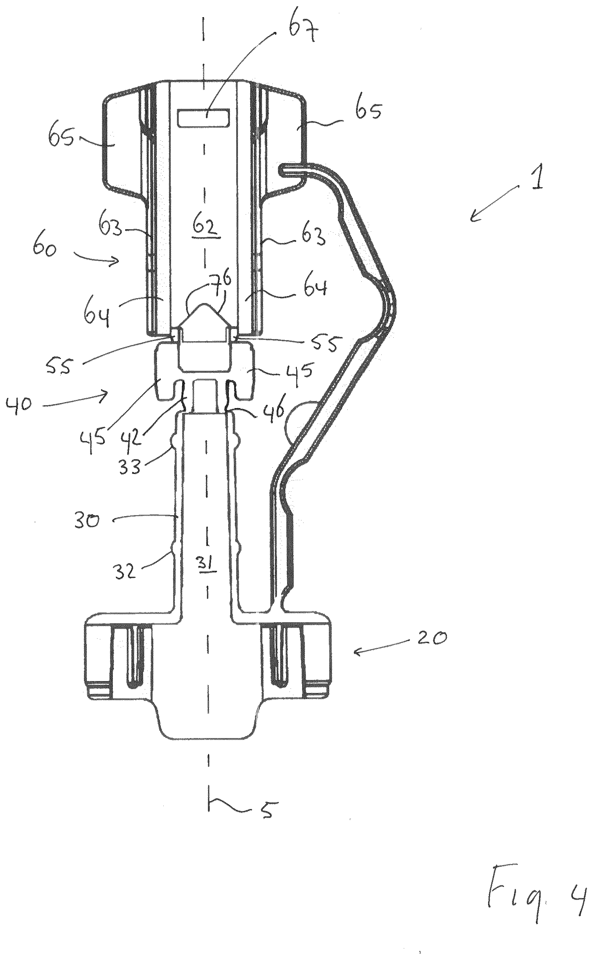

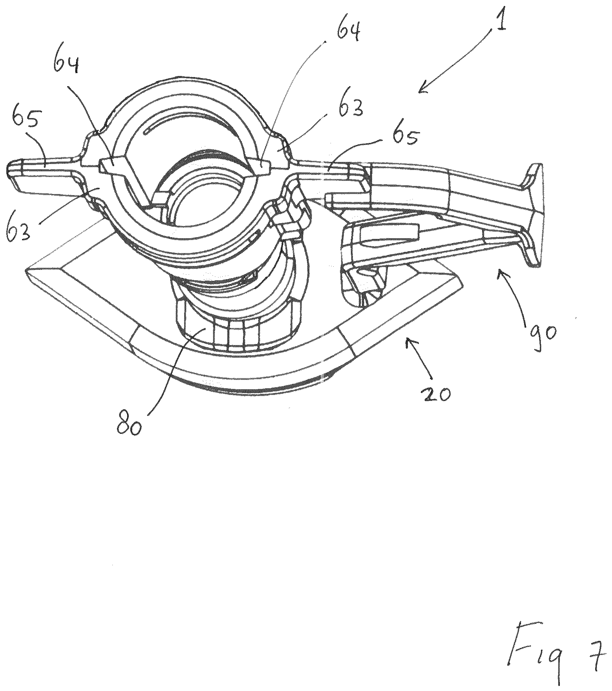

As can be understood from, for example, figures 4 and 7, the compression action causes each tab 45 to be received in a respective one of the two longitudinal grooves 64. The tabs 45 and grooves 64 cooperate to provide a rotational locking of the plug 40 and the cap body 60.

The presence of the longitudinal ribs 63 allows for a reduced wall thickness of the skirt portion 62 of the cap body as the longitudinal ribs provides for a reinforcement of the cap body as well as a structural connection of the wing portions 65 to the skirt portion 61.

The longitudinal ribs 63 also allows for the grooves 64 to be designed with a significant depth, see perpendicular to the main axis 5, compared to the wall thickness of the skirt portion 61, which in turn allow for a robust design of the two opposed tabs 45 of the plug 40. This creates an optimal load path between the wing portions 65 and the plug 40 when the user opens the closure assembly 100 for the first time. The cooperation between the tabs 45 and the grooves 64 transmits torque when the user twists the cap body 60.

The axial locking means between the plug and the cap body are, in this example, embodied by outwardly projecting snap formations 47 of the plug 40, distinct from the tabs 45. The cap body 60 has complementary snap formations 67 so as to provide axial locking of the plug and the cap body. As the axial locking between the plug 40 and the cap body 60 is done via axial locking formations that are distinct from the tabs and grooves, the tabs 45 need not to absorb axial loads.

As illustrated, the plug 40 has two diametrically opposed and outwardly projecting snap formations 47 for axial locking, here arranged perpendicular to the tabs 45. The cap body has snap formations 67 embodied as diametrically opposed windows extending from the bore 62 through the cap body.

A robust connection between the plug 40 and the cap body 60 is provided in view of transfer of torque as well axial locking. Herein, the tabs 45 serve for transfer of torque whereas the snap formations 47 provide the axial locking, e.g. in view of reliable keeping the plug 40 within the cap body as part of the cap part 70 after first-time opening of the closure assembly 100.

The cap body 60 is provided with an outwardly protruding collar portion 66 which extends about the circumference of the cap body and merges with the longitudinal ribs 63. As shown, the windows 67 extend from the bore through the collar portion 66 of the cap body.

Instead of windows 67, the cap body could be provided with indentations adjoining the bore 62 into which the formations 47 snap, e.g. an inner circumferential groove. However, the provision of windows 67 is preferred in view of the injection molding process, possibly also in view of a computerized visual inspection of the closure assembly after production, e.g. in view of assessing whether the plug 40 is correctly locked in the cap body.

As shown, in embodiments, the longitudinal ribs 63 have a variation, e.g. stepwise variation, of wall thickness thereof over the length of the rib, the wall thickness being greater where the plug 40 is received than in a lower section of the cap body. This allows to minimize the use of plastic material, without undue loss of strength of the cap body.

The plug 40 has a transverse wall portion 41 and an annular seal portion 42 projecting downward from the transverse wall portion. The plug 40 further has an annular top wall portion 43 projecting upward from the transverse wall portion 41. The annular top wall portion 43 adjoins a periphery of the transverse wall portion 41 and the annular seal portion 42 has a smaller horizontal cross-section than the transverse wall portion 41 and the annular top wall portion. The seal portion 42 is dimensioned to sealingly fit into the top of the neck 30 upon reclosing of the assembly 100. For example, as here, the seal portion is open from below. For example, as here, the seal portion has a bulbous outer periphery to enhance the sealing action and in view of snap locking the cap part when reclosing the assembly 100.

The tabs 45 each adjoin the top wall portion 43.

The tabs 45 each have a tab portion which protrudes downward relative to the transverse wall portion 41 of the plug and is spaced from the annular seal portion 42 of the plug. For example, in the reclosing position of the cap part, this tab portion contacts the exterior of the top section of the neck 30.

It is shown that each tab 45 has an upper edge which is in a plane common with an upper edge of the top wall portion 43 of the plug.

It is shown that the transversal wall 41 is planar.

The frangible peripheral connection 46, formed by a thin walled portion, is present between the top end of the tubular neck 30 and a lower edge of the annular seal portion 42 of the plug 40.

In the axial compression action, the plug 40 enters into the bore 62 until the plug 40 is located in the bore near the upper end of the cap body 60 and the tabs 46 and grooves 64, as well as the axial locking formations 47, 67 cooperate to lock the plug and cap body in rotational and axial directions.

As preferred, the plug and cap body are dimensioned to have an interference fit upon completion of the compression action. Here, the lower ends of the tabs 45 have an interference fit dimension relative to the upper section of the grooves 64 .

In practical embodiments, the production method may comprise opening of the mould such that the component 1 remains held by one mould part, e.g. this mould part having an inner core part that defines the product passage 31 through the tubular neck 30 and supports the plug 40, e.g. as here the core part protruding into the annular seal portion. During the "on-mould" compression action, this core part may be used to effectively support the plug 40 so that the peripheral connection 46 remains intact even as the cap body is pressed down. For example, by actuating a portion of another mould part, the cap body is pressed in axial direction towards the base portion 20 of the fitment. The compression action can also be performed by an actuated mechanism that is distinct from the mould.

As the breakable bridges 55 between the plug 40 and the cap body 60 break due to the compression action, remnants of the bridges 55 remain present on the top of the plug 40. Whilst these remnants are very small in practice, they may be noticeable if they would stick out from the top end of the cap part. This issue is avoided by locking the plug 40 in the bore somewhat below the upper end of the bore, as shown here, so that the remnants of the breakable bridges 55 are located within the bore. This effectively hides those remnants so that the user cannot experience their presence.

It is illustrated that the cap body 60 has a lower edge 69 defining two diametrically opposed recesses 75. Each recess 75 defines a pair of inclined sides 76 which extend with opposite inclinations from a lowermost face 77 of the cap body upward to an apex of the recess.

The fitment 10 has two diametrically opposed ramp portions 80, here at a lower end of the tubular neck 30. The ramp portions 80 protrude upwardly from the base portion 20.

The ramp portions 80 each have inclined sides. The ramp portions 80 and the recesses 75 at the lower edge of the cap body 60 are complementary so that, in the reclosing position of the cap body, see for example figure 13, each ramp portion 80 is located in a corresponding one of the two recesses 75.

When the user desires to open the reclosed closure assembly 100, the user will rotate the cap part 70 which is initially in the reclosing position thereof. Then the cooperating inclined sides of the recesses 75 and of the ramp portions 80 cause a lift action of the cap part relative to the tubular neck 30.

The provision of recesses 75 and ramp portions 80 enhances opening of the closure assembly 100 after it has been reclosed by the user. Also, in the reclosing position, the ramp portions 80 effectively stabilize the cap part 70 on the tubular neck 30.

Stabilization of the cap part 70 on the tubular neck 30 is enhanced by the provision of one or more stabilizing beads 32, 33 on the tubular neck.

The tubular neck 30 here is provided with two axially spaced circumferential beads 32, 33, which may also be called stabilizing beads, and which are configured to engage, e.g. frictionally engage, the cap body internally, see for example figure 8.

As preferred, a lower circumferential bead 32 and an upper circumferential bead 33 are provided on the neck 30. As preferred, the lower bead 32 is located at a height above the ramp portions 80 and the upper bead 33 is located at a height below the top end of the neck 30. The beads 32, 33 frictionally engage the cap body 60 internally, both in the position thereof obtained after completion of the compression action and in the reclosing position.

The stabilizing beads 32, 33 guide the cap part during reclosing of the closure assembly 100 in such a manner that the seal portion 42 of plug 40 does not collide with the top end of the neck 30.

The provision of the recesses 75 in alignment with the snap formations 47 of the plug 40 also is of benefit during the axial compression action. Herein these axial locking formations 47 enter the respective recess 75 and interact with the inclined sides 76 thereof so as to gradually elastically widen the lower end of the cap body 60 for entry of the snap locking formations into the bore 62 of the cap body. This interaction between the inclined sides of the recesses 75 and the snap locking formations 47 on the plug, facilitates the entry of the formations 47 into the bore without unduly straining the snap locking formations 47 in this step.

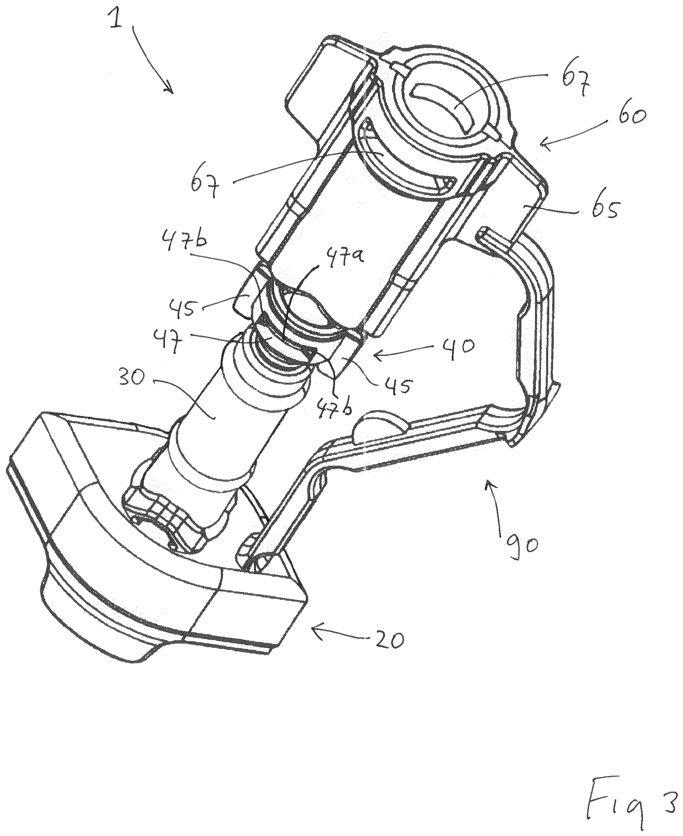

As can be seen best in figure 3, the snap formations 47 on the plug each have a top with a top face 47a and chamfered side faces 47b on either side of the top face. The chamfered side faces 47b facilitate the interaction with the inclined sides 76 of the recess 75 so as to effectively widen the lower end of the cap body for entry of the plug 40 into the bore 62. For example, the inclination of the chamfered side faces is the same or similar to the inclination of the inclined side of the recess. As preferred, the top face 47a extends perpendicular to the main axis, so as to optimize axial fixation of the plug 40 in the bore.

The two longitudinal grooves 64 extend from the lower edge of the cap part upward. Their presence effectively renders the cap body flexible in view of entry of the plug 40 into the bore, wherein the plug has the axial locking formations 47 perpendicular to the tabs 45, so the formations 47 not entering into the grooves 64 in the compression action. This reduces the loads on the snap formations 47 during entry into the bore. This effect is enhanced by the measure of having a reduced wall thickness of the ribs 63 in a lower section and a thicker wall thickness in an upper section of the ribs, so that the ribs 63 are stiffer in the upper section, here also as they merge with the collar portion, where the plug becomes locked to the cap body.

The cap part 60 and the tubular neck 30 are configured to provide a snap joint when the cap part is in the reclosing position thereof, here only in the reclosing position thereof. In this example, it is envisaged that remnants of the frangible peripheral connection 46 that remain on the tubular neck, even though that will be a thin and small annular ridge in practice, allow to form a snap joint with the seal portion 42 of the plug 40.

The component 1 and thus the closure assembly 100 obtained therefrom further comprises the integrated strap 90, here a single one integrated strap as is preferred. The strap is injection moulded integrally with the fitment 10 and with the cap body 60 as one piece of a plastic material as the component 1.

The provision of the strap 90 as integrated part of the moulded component 1 allows for effective production of the closure assembly 100, with the benefit of the cap part 70 remaining connected to the fitment 10, and thereby to the container body, after opening by the user.

The strap 90 has a first end connected to the fitment 10 and a second end connected to the cap body, here to a wing portion 65. Generally, the strap 90 is configured to keep the cap part 70 connected to the fitment after first-time opening of the closure assembly 100.

It is shown here, that the first end is connected to the base portion 20 of the fitment, remote from the tubular neck 30, and that the second end of the strap 90 is connected to a wing portion 65 of the cap body.

The strap 90 is an articulated strap comprising multiple strap segments joined in series by hinges.

As preferred, the strap 90 is an articulated strap comprising a first strap segment 92 joined to the base portion 20 via a first hinge 91, a second strap segment 94 joined to the first strap segment 92 via a second hinge 93, a third strap segment 96 joined to the second strap segment 94 via a third hinge 95. The third strap segment 96 is joined to the cap body, here the wing portion 65, via a fourth hinge 97. The hinges 91, 93, 95, 97 define parallel hinge axes.

The strap segments 92, 94, 96 all extend in one vertical plane, here through the main axis 5, and when the strap 90 is folded the segments remain in that plane. As shown and preferred, the plane also encompasses the (top) edge of the pouch container on which the closure assembly has been secured.

The strap 90 is initially moulded with the strap segments 92, 94, 96 in an extended or stretched configuration of the strap. The strap 90 is then folded due to the compression action as here the second and third strap segments fold about hinges 93, 95, of the strap.

In this example, the first strap segment 92 is moulded so as to extend parallel to the tubular neck 30, so parallel to the main axis 5. The second strap segment 94 is directed at an inclination outward from the top of the first strap segment 92, and the third strap segment 96 is directed at an inclination inward from the top of the second strap segment 94.

During the compression action, the first strap segment 92 basically maintains its upright orientation, whereas the second and third strap segments 94, 96 fold about the hinges from their extended configuration into a configuration wherein the second strap segment 94 extends perpendicular to the main axis 5 and away from the cap body 60. The third strap segment 96 extends along the second strap segment 94 after completion of the compression action. As can be seen in figure 8, the second and third strap segment 94, 96 do allow for them to become closer together, which is envisaged in view of the reclosing position of the cap part 70 wherein the cap part is basically slid over the neck 30 further than in the position obtained after the compression step wherein the frangible peripheral connection 46 is still intact.

As shown, the strap 90 is configured such that, in the reclosing position of the cap part 70, the first strap segment 92 extends parallel to the main axis 5, preferably close to the cap body 70, the second strap segment 94 extends perpendicular to the main axis 5 away from the cap body, and the third strap segment 96 extends along the second strap segment 94, effectively back to the cap body 60.

As can be seen in figure 11, the first hinge 91 mainly is provided to allow the first strap segment 92 to be pivoted outward, away from the neck 30, so that the cap part 70 can be placed as far away as possible from the neck, e.g. to facilitate unhindered outflow of product and/or to drink from the container when placing the neck between the lips of the user. For example, the first hinge allows to pivot the first strap segment into a near horizontal position.

The strap 90 is also provided with an anti-nesting formation 98 on one or both of the second and third strap segments 94, 96, which serves to obstruct the gap between them for entry by the folded strap of another closure assembly, e.g. during handling and/or conveyance of assemblies 100.

One or more of the hinges, here hinge 95, is embodied with a width that is greater than the width of the adjoining strap segments 94, 96. This enhances strength of the hinge 95 and also serves to counter undesired nesting of straps 90 of different closure assemblies 100.

In an alternative embodiment, the base portion of the fitment 10 is embodied with a lower circumferential flange portion adapted to be secured or secured to a panel of a container, e.g. a panel of a carton or to a wall of a collapsible pouch.

## Claims

1. A closure assembly (100) comprising:
- a monolithic fitment (10) made, e.g. injection moulded, of plastic material, which fitment comprises:
- a base portion (20) configured to be secured or secured to a container body,
- a tubular neck (30) around a product passage (31), which tubular neck extends from the base portion along a main axis (5) and forms a mouth at a top end of the tubular neck allowing for dispensing of product from the container body,
- a plug (40) integrally made to the top end of the tubular neck (30), wherein the plug has a seal portion (42), and wherein the plug is connected via a frangible peripheral connection (46) to the neck (30) so as to close the product passage,
- a cap body (60) made, e.g. injection moulded, of plastic material, the cap body having a skirt portion (61) defining an open-ends bore (62) extending from a lower opening at a lower end of the cap body to an upper opening at an upper end of the cap body,
wherein the cap body (60) is mounted over the tubular neck (30) and over the plug (40) such that the plug is located in the bore (62) at or near the upper end of the cap body and the skirt portion (61) extends about the tubular neck,
wherein the plug (40) and the cap body (60) are provided with cooperating locking formations configured to lock the plug and cap body in axial and rotational directions,
wherein the closure assembly (100) is configured to allow for a first-time opening by the user engaging the cap body (60) and causing the frangible peripheral connection (46) to break so that the plug and the cap body then form a cap part (70) and so that the product passage (31) is open,
and wherein the cap part (70) is replaceable by the user over the tubular neck into a reclosing position thereof, wherein the seal portion (42) of the plug is introduced into a top section of the tubular neck (30) and sealingly engages the tubular neck so as to close the product passage,
**characterized in that**
the skirt portion (61) of the cap body has an outwardly protruding longitudinal rib (63) extending parallel to the main axis (5),
wherein the bore (62) of the cap body comprises a longitudinal groove (64) extending parallel to the main axis (5), wherein the longitudinal groove is partially located within the longitudinal rib (63),
wherein the plug (40) has an outwardly projecting tab (45), the tab being received in the longitudinal groove (64), the tab and groove cooperating to provide a rotational locking of the plug (40) and the cap body (60),
and wherein the plug and cap body are further provided with cooperating axial locking formations (47,67), distinct from the tab and groove (45,64), which axial locking formations (47,67) are configured to lock the plug and cap body in axial directions.

2. Closure assembly according to claim 1, wherein the cap body (6) has two diametrically opposed wing portions (65) which extend outwardly from the skirt,
wherein the skirt portion of the cap body has two outwardly protruding longitudinal ribs (63) extending parallel to the main axis and diametrically opposite from each other,
wherein each wing portion (65) is integral with a corresponding longitudinal rib (63),
wherein the bore of the cap body comprises two diametrically opposed longitudinal grooves (64) extending parallel to the main axis, wherein each longitudinal groove is partially located within a respective one of the two longitudinal ribs (63),
wherein the plug (40) has two diametrically opposed and outwardly projecting tabs (45), each tab being received in a respective one of the two longitudinal grooves (64), the tabs and grooves cooperating to provide a rotational locking of the plug and cap body.

3. Closure assembly according to claim 1 or 2, wherein the axial locking means are embodied by one or more outwardly projecting snap formations (47) of the plug, distinct from the at least one tab (45), and one or more complementary snap formations (67) of the cap body so as to provide axial locking of the plug and the cap body, wherein, for example, the plug (40) has two diametrically opposed and outwardly projecting snap formations (47), e.g. perpendicular to the tabs (45) in an embodiment according to claim 2, and wherein the cap body is provided with diametrically opposed windows (67) extending from the bore (62) through the cap body.

4. Closure assembly according to any one or more of claims 1 - 3, wherein the cap body is provided with an outwardly protruding collar portion (66) merging with the at least one longitudinal rib (63), wherein, for example, in an embodiment according to claim 3, the one or more complementary snap formations (67) of the cap body are embodied as one or more windows (67) extending from the bore (62) through the collar portion (66) of the cap body, a corresponding snap formation (47) of the plug being received in each window (67), wherein, for example, the plug has two diametrically opposed and outwardly projecting snap formations (47) and the cap body is provided with diametrically opposed windows (67) extending from the bore through the collar portion of the cap body.

5. Closure assembly according to any one or more of claims 1 - 4, wherein the plug has a transverse wall portion (41), wherein the seal portion (42) is an annular seal portion projecting downward from the transverse wall portion, and wherein the plug further has an annular top wall portion (43) projecting upward from the transverse wall portion (41), wherein the frangible peripheral connection (46) adjoins a lower edge of the annular seal portion (42) of the plug, wherein, for example, the annular top wall portion (43) adjoins a periphery of the transverse wall portion (41) and the annular seal portion has a smaller horizontal cross-section than the transverse wall portion (41) and the annular top wall portion.

6. Closure assembly according to any one or more of claims 1 - 5, wherein the cap body (60) has a lower edge defining two diametrically opposed recesses (75), each recess defining a pair of inclined sides (76) which extend with opposite inclinations from a lowermost face of the cap body upward to an apex of the recess, and wherein the fitment (10) has two diametrically opposed ramp portions (80), e.g. at or near a lower end of the tubular neck (30), e.g. protruding upwardly from the base portion (20), which ramp portions (80) each have inclined sides, and wherein the ramp portions (80) and the recesses (75) at the lower edge of the cap body are complementary so that, in the reclosing position of the cap part (70), each ramp portion (80) is located in a corresponding one of the two recesses (75), and wherein, upon the user rotating the cap part (70) in the reclosing position thereof, the cooperating inclined sides of the recesses (75) and of the ramp portions (80) cause a lift action of the cap part relative to the tubular neck.

7. Closure assembly according to any one or more of claims 1 - 6, wherein the tubular neck (30) is provided with at least one circumferential bead (32,33), e.g. two axially spaced circumferential beads, wherein the at least one circumferential bead (32,33) is configured to frictionally engage the cap body internally.

8. Closure assembly according to any one or more of claims 1 - 7, wherein the cap part (70) and the tubular neck (30) are configured to provide a snap joint when the cap part is in the reclosing position thereof, e.g. only in the reclosing position thereof, wherein, for example, remnants of the frangible peripheral connection (46) on the tubular neck form a snap joint with the plug, e.g. in an embodiment of claim 5 with the annular seal portion (42) of the plug (40).

9. Closure assembly according to any one or more of claims 1 - 8, wherein the closure assembly further comprises an integrated strap (90), preferably has a single one integrated strap, which is made, e.g. moulded, integrally with the fitment (10) and with the cap body (60) as one piece of a plastic material,
wherein the strap (90) has a first end connected to the fitment (10) and a second end connected to the cap body (60), and wherein the strap is configured to keep the cap part connected to the fitment after first-time opening of the closure assembly, wherein, for example, the first end is connected to the base portion (20) of the fitment, remote from the tubular neck, wherein, for example, the second end of the strap is connected to a wing portion (65) of the cap body, preferably wherein the strap (90) is an articulated strap comprising multiple strap segments (92,94,96) joined in series by one or more hinges (93,94).

10. Closure assembly according to claim 9, wherein the strap is an articulated strap (90) comprising a first strap segment (92) joined to the fitment e.g. to the base portion (20), via a first hinge (91), a second strap segment (94) joined to the first strap segment via a second hinge (93), a third strap segment (96) joined to the second strap segment via a third hinge (5), and the third strap segment (96) being joined to the cap body (60) via a fourth hinge (97), where the hinges (91,93,95,97) define parallel hinge axes, preferably wherein the strap (90) is configured such that, in the reclosing position of the cap part (70), the first strap segment (92) extends parallel to the main axis (5), the second strap segment (94) extends perpendicular to the main axis away from the cap body, and the third strap segment (96) extends along the second strap segment.

11. Closure assembly according to any one or more of claims 1 - 10, wherein the base portion (20) of the fitment (10) is embodied with a seal boat portion adapted to be secured or secured between opposed film walls of a collapsible pouch container, or wherein the base portion of the fitment is embodied with a lower circumferential flange portion adapted to be secured or secured to a panel of a container, e.g. a panel of a carton or to a wall of a collapsible pouch.

12. Container provided with a closure assembly (100) according to any one or more of the claims 1 - 11, e.g. a collapsible pouch container or a carton.

13. Method for production of a closure assembly (100) according to any one or more of the claims 1 - 11, in which method:
- a monolithic component (1) is made, e.g. injection moulded, of plastic material, which monolithic component is composed of both the fitment (10) and the cap body (60), wherein the lower end of the cap body (60) is integrally connected to the plug (40) via one or more breakable bridges (55) and the cap body (60) extends away from the plug (40) along the main axis (5) opposite the tubular neck (30),
wherein the component (1) is subsequently subjected to an axial compression action in order to obtain the closure assembly (100), in which axial compression action the cap body is (60) forced towards the base portion (20) of the fitment (10) in such a manner that the frangible peripheral connection (46) remains intact and the one or more breakable bridges (55) are broken,
wherein, in the axial compression action, the at least one tab (45) of the plug (40) enters into the respective longitudinal groove (64) and slides through the groove until the plug is located in the bore (62) at or near the upper end of the cap body (60) and the axial locking formations (47,67) cooperate to lock the plug and cap body in axial directions.

14. Method according to claim 13, wherein the monolithic component (1) is made by injection molding in an injection mold, and wherein the axial compression action is performed prior to the closure assembly (100) being ejected from the injection mold.

15. Method according to claim 13 or 14, wherein the monolithic component (1) is made with an integrated strap (90) which is made, e.g. moulded, integrally with the fitment and with the cap body as one piece of a plastic material, which strap has a first end connected to the fitment and a second end connected to the cap body, and which strap (90) is configured to keep the cap part connected to the fitment after first-time opening of the closure assembly, preferably wherein the strap is an articulated strap (90) comprising multiple strap segments (92,94,96) joined in series by one or more hinges, and wherein the strap is folded due to the compression action as strap segments fold about the one or more hinges, wherein, for example, the first strap segment (92) extends parallel to the main axis, the second strap segment (94) extends perpendicular to the main axis away from the cap body, and the third strap segment (96) extends along the second strap segment after completion of the compression action.

## Patentansprüche

1. Verschlussanordnung (100), umfassend:
- einen einstückigen Einsatz (10), hergestellt, z. B. spritzgegossen, aus Kunststoffmaterial, wobei der Einsatz umfasst:
- einen Basisabschnitt (20), der ausgelegt ist, an einem Behälterkörper befestigt zu werden oder daran befestigt ist,
- einen rohrförmigen Hals (30) um einen Produktdurchgang (31), wobei sich der rohrförmige Hals vom Basisabschnitt entlang einer Hauptachse (5) erstreckt und an einem oberen Ende des rohrförmigen Halses eine Mündung ausbildet, die eine Abgabe von Produkt aus dem Behälterkörper ermöglicht,
- einen Stopfen (40), der einstückig mit dem oberen Ende des rohrförmigen Halses (30) ausgebildet ist, wobei der Stopfen einen Dichtabschnitt (42) aufweist, und wobei der Stopfen über eine bruchfähige umlaufende Verbindung (46) mit dem Hals (30) verbunden ist, um den Produktdurchgang zu verschließen,
- einen Kappenkörper (60), hergestellt, z. B. spritzgegossen, aus Kunststoffmaterial, wobei der Kappenkörper einen Mantelabschnitt (61) aufweist, der eine an beiden Enden offene Bohrung (62) definiert, die sich von einer unteren Öffnung an einem unteren Ende des Kappenkörpers zu einer oberen Öffnung an einem oberen Ende des Kappenkörpers erstreckt,
wobei der Kappenkörper (60) über den rohrförmigen Hals (30) und über den Stopfen (40) angeordnet ist, so dass sich der Stopfen in der Bohrung (62) an oder nahe dem oberen Ende des Kappenkörpers befindet und sich der Mantelabschnitt (61) um den rohrförmigen Hals erstreckt,
wobei der Stopfen (40) und der Kappenkörper (60) zusammenwirkende Verriegelungsstrukturen aufweisen, die ausgelegt sind, den Stopfen und den Kappenkörper in axialer und in Drehrichtung zu verriegeln,
wobei die Verschlussanordnung (100) ausgelegt ist, ein erstmaliges Öffnen zu ermöglichen, indem ein Benutzer den Kappenkörper (60) betätigt und dadurch die bruchfähige umlaufende Verbindung (46) zum Brechen bringt, so dass der Stopfen und der Kappenkörper anschließend ein Kappenteil (70) bilden und so dass der Produktdurchgang (31) offen ist,
und wobei das Kappenteil (70) durch den Benutzer wieder auf den rohrförmigen Hals in eine Wiederverschlussposition aufsetzbar ist, wobei der Dichtabschnitt (42) des Stopfens in einen oberen Abschnitt des rohrförmigen Halses (30) eingeführt wird und dichtend mit dem rohrförmigen Hals zusammenwirkt, um den Produktdurchgang zu verschließen,
**dadurch gekennzeichnet, dass**
der Mantelabschnitt (61) des Kappenkörpers eine nach außen vorstehende Längsrippe (63) aufweist, die sich parallel zur Hauptachse (5) erstreckt,
wobei die Bohrung (62) des Kappenkörpers eine Längsnut (64) umfasst, die sich parallel zur Hauptachse (5) erstreckt, wobei die Längsnut teilweise innerhalb der Längsrippe (63) angeordnet ist,
wobei der Stopfen (40) eine nach außen vorstehende Lasche (45) aufweist, wobei die Lasche in der Längsnut (64) aufgenommen ist, wobei Lasche und Nut zusammenwirken, um eine Drehverriegelung des Stopfens (40) und des Kappenkörpers (60) bereitzustellen,
und wobei der Stopfen und der Kappenkörper ferner mit zusammenwirkenden axialen Verriegelungsstrukturen (47, 67) versehen sind, die von Lasche und Nut (45, 64) verschieden sind, wobei die axialen Verriegelungsstrukturen (47, 67) ausgelegt sind, den Stopfen und den Kappenkörper in axialer Richtung zu verriegeln.

2. Verschlussanordnung nach Anspruch 1, wobei der Kappenkörper (6) zwei einander diametral gegenüberliegende Flügelabschnitte (65) aufweist, die sich vom Mantelabschnitt nach außen erstrecken,
wobei der Mantelabschnitt des Kappenkörpers zwei nach außen vorstehende Längsrippen (63) aufweist, die sich parallel zur Hauptachse erstrecken und einander diametral gegenüberliegen,
wobei jeder Flügelabschnitt (65) einstückig mit einer entsprechenden Längsrippe (63) ausgebildet ist,
wobei die Bohrung des Kappenkörpers zwei einander diametral gegenüberliegende Längsnuten (64) umfasst, die sich parallel zur Hauptachse erstrecken, wobei jede Längsnut teilweise innerhalb einer jeweiligen der beiden Längsrippen (63) angeordnet ist,
wobei der Stopfen (40) zwei einander diametral gegenüberliegende und nach außen vorstehende Laschen (45) aufweist, wobei jede Lasche in einer jeweiligen der beiden Längsnuten (64) aufgenommen ist, wobei die Laschen und die Längsnuten zusammenwirken, um eine Drehverriegelung des Stopfens und des Kappenkörpers bereitzustellen.

3. Verschlussanordnung nach Anspruch 1 oder 2, wobei die axialen Verriegelungsmittel durch eine oder mehrere nach außen vorstehende Schnappstrukturen (47) des Stopfens ausgebildet sind, die von der mindestens einen Lasche (45) verschieden sind, und durch eine oder mehrere komplementäre Schnappstrukturen (67) des Kappenkörpers, sodass eine axiale Verriegelung des Stopfens und des Kappenkörpers bereitgestellt wird, wobei beispielsweise der Stopfen (40) zwei einander diametral gegenüberliegende und nach außen vorstehende Schnappstrukturen (47) aufweist, z. B. senkrecht zu den Laschen (45) in einer Ausführungsform nach Anspruch 2, und wobei der Kappenkörper mit einander diametral gegenüberliegenden Fenstern (67) versehen ist, die sich von der Bohrung (62) durch den Kappenkörper erstrecken.

4. Verschlussanordnung nach einem oder mehreren der Ansprüche 1 - 3, wobei der Kappenkörper mit einem nach außen vorstehenden Kragenabschnitt (66) versehen ist, der in die mindestens eine Längsrippe (63) übergeht, wobei beispielsweise in einer Ausführungsform nach Anspruch 3 die eine oder die mehreren komplementären Schnappstrukturen (67) des Kappenkörpers als ein oder mehrere Fenster (67) ausgebildet sind, die sich von der Bohrung (62) durch den Kragenabschnitt (66) des Kappenkörpers erstrecken, wobei eine entsprechende Schnappstruktur (47) des Stopfens in jedem Fenster (67) aufgenommen ist, wobei beispielsweise der Stopfen zwei einander diametral gegenüberliegende und nach außen vorstehende Schnappstrukturen (47) aufweist und der Kappenkörper mit einander diametral gegenüberliegenden Fenstern (67) versehen ist, die sich von der Bohrung durch den Kragenabschnitt des Kappenkörpers erstrecken.

5. Verschlussanordnung nach einem oder mehreren der Ansprüche 1 - 4, wobei der Stopfen einen Querwandabschnitt (41) aufweist, wobei der Dichtabschnitt (42) ein ringförmiger Dichtabschnitt ist, der sich nach unten vom Querwandabschnitt erstreckt, und wobei der Stopfen ferner einen ringförmigen Oberwandabschnitt (43) aufweist, der sich nach oben vom Querwandabschnitt (41) erstreckt, wobei die bruchfähige umlaufende Verbindung (46) an eine untere Kante des ringförmigen Dichtabschnitts (42) des Stopfens angrenzt, wobei beispielsweise der ringförmige Oberwandabschnitt (43) an einen Umfang des Querwandabschnitts (41) angrenzt und der ringförmige Dichtabschnitt einen kleineren horizontalen Querschnitt als der Querwandabschnitt (41) und der ringförmige Oberwandabschnitt aufweist.

6. Verschlussanordnung nach einem oder mehreren der Ansprüche 1 - 5, wobei der Kappenkörper (60) eine untere Kante aufweist, die zwei einander diametral gegenüberliegende Ausnehmungen (75) definiert, wobei jede Ausnehmung ein Paar geneigter Seiten (76) definiert, die sich mit entgegengesetzten Neigungen von einer untersten Fläche des Kappenkörpers nach oben zu einer Spitze der Ausnehmung erstrecken, und wobei der Einsatz (10) zwei einander diametral gegenüberliegende Rampenabschnitte (80) aufweist, z. B. an oder nahe einem unteren Ende des rohrförmigen Halses (30), z. B. vom Basisabschnitt (20) nach oben vorstehend, wobei die Rampenabschnitte (80) jeweils geneigte Seiten aufweisen, und wobei die Rampenabschnitte (80) und die Ausnehmungen (75) an der unteren Kante des Kappenkörpers komplementär sind, so dass sich in der Wiederverschlussposition des Kappenteils (70) jeder Rampenabschnitt (80) in einer entsprechenden der beiden Ausnehmungen (75) befindet, und wobei bei einer Drehung des Kappenteils (70) durch den Benutzer in dessen Wiederverschlussposition die zusammenwirkenden geneigten Seiten der Ausnehmungen (75) und der Rampenabschnitte (80) eine Hubbewegung des Kappenteils relativ zum rohrförmigen Hals bewirken.

7. Verschlussanordnung nach einem oder mehreren der Ansprüche 1 - 6, wobei der rohrförmige Hals (30) mit mindestens einem umlaufenden Wulst (32, 33) versehen ist, z. B. zwei in axialer Richtung beabstandeten umlaufenden Wülsten, wobei der mindestens eine umlaufende Wulst (32, 33) ausgelegt ist, innen am Kappenkörper reibschlüssig anzuliegen.

8. Verschlussanordnung nach einem oder mehreren der Ansprüche 1 - 7, wobei das Kappenteil (70) und der rohrförmige Hals (30) ausgelegt sind, in der Wiederverschlussposition des Kappenteils eine Schnappverbindung bereitzustellen, z. B. nur in der Wiederverschlussposition, wobei beispielsweise Überreste der bruchfähigen umlaufenden Verbindung (46) am rohrförmigen Hals eine Schnappverbindung mit dem Stopfen bilden, z. B. in einer Ausführungsform nach Anspruch 5 mit dem ringförmigen Dichtabschnitt (42) des Stopfens (40).

9. Verschlussanordnung nach einem oder mehreren der Ansprüche 1 - 8, ferner umfassend ein integriertes Band (90), vorzugsweise genau ein integriertes Band, das einstückig, z. B. geformt, aus einem Kunststoffmaterial mit dem Einsatz (10) und mit dem Kappenkörper (60) ausgebildet ist,
wobei das Band (90) ein erstes Ende aufweist, das mit dem Einsatz (10) verbunden ist, und ein zweites Ende, das mit dem Kappenkörper (60) verbunden ist, und wobei das Band ausgelegt ist, das Kappenteil nach erstmaligem Öffnen der Verschlussanordnung mit dem Einsatz verbunden zu halten, wobei beispielsweise das erste Ende mit dem Basisabschnitt (20) des Einsatzes verbunden ist, entfernt vom rohrförmigen Hals, wobei beispielsweise das zweite Ende des Bandes mit einem Flügelabschnitt (65) des Kappenkörpers verbunden ist, vorzugsweise wobei das Band (90) ein gelenkiges Band ist, das mehrere Bandabschnitte (92, 94, 96) umfasst, die in Reihe durch ein oder mehrere Scharniere (93, 94) miteinander verbunden sind.

10. Verschlussanordnung nach Anspruch 9, wobei das Band ein gelenkiges Band (90) ist, das einen ersten Bandabschnitt (92) umfasst, der mit dem Einsatz, z. B. mit dem Basisabschnitt (20), über ein erstes Scharnier (91) verbunden ist, einen zweiten Bandabschnitt (94), der über ein zweites Scharnier (93) mit dem ersten Bandabschnitt verbunden ist, einen dritten Bandabschnitt (96), der über ein drittes Scharnier (5) mit dem zweiten Bandabschnitt verbunden ist, und wobei der dritte Bandabschnitt (96) über ein viertes Scharnier (97) mit dem Kappenkörper (60) verbunden ist, wobei die Scharniere (91, 93, 95, 97) parallele Scharnierachsen definieren, vorzugsweise wobei das Band (90) so ausgelegt ist, dass sich in der Wiederverschlussposition des Kappenteils (70) der erste Bandabschnitt (92) parallel zur Hauptachse (5) erstreckt, der zweite Bandabschnitt (94) sich senkrecht zur Hauptachse vom Kappenkörper weg erstreckt und der dritte Bandabschnitt (96) sich entlang des zweiten Bandabschnitts erstreckt.

11. Verschlussanordnung nach einem oder mehreren der Ansprüche 1 - 10, wobei der Basisabschnitt (20) des Einsatzes (10) mit einem bootförmigen Dichtabschnitt ausgebildet ist, der ausgelegt ist, zwischen gegenüberliegenden Folienwänden eines kollabierbaren Beutelbehälters befestigt zu werden oder zwischen diesen befestigt ist, oder wobei der Basisabschnitt des Einsatzes mit einem unteren umlaufenden Flanschabschnitt ausgebildet ist, der ausgelegt ist, an einer Wand eines Behälters befestigt zu werden oder an dieser befestigt ist, z. B. an einer Wand eines Kartons oder an einer Wand eines kollabierbaren Beutelbehälters.

12. Behälter, der mit einer Verschlussanordnung (100) nach einem oder mehreren der Ansprüche 1-11 versehen ist, z. B. ein kollabierbarer Beutelbehälter oder ein Karton.

13. Verfahren zur Herstellung einer Verschlussanordnung (100) nach einem oder mehreren der Ansprüche 1 - 11, wobei bei dem Verfahren:
- eine einstückige Komponente (1), hergestellt, z. B. spritzgegossen, aus Kunststoffmaterial, bereitgestellt wird, wobei die einstückige Komponente sowohl den Einsatz (10) als auch den Kappenkörper (60) umfasst, wobei ein unteres Ende des Kappenkörpers (60) über eine oder mehrere brechbare Stege (55) einstückig mit dem Stopfen (40) verbunden ist und sich der Kappenkörper (60) vom Stopfen (40) entlang der Hauptachse (5) in entgegengesetzter Richtung zum rohrförmigen Hals (30) erstreckt,
wobei die Komponente (1) anschließend einer axialen Kompressionswirkung unterzogen wird, um die Verschlussanordnung (100) zu erhalten, wobei bei der axialen Kompressionswirkung der Kappenkörper (60) in Richtung des Basisabschnitts (20) des Einsatzes (10) gedrückt wird, derart, dass die bruchfähige umlaufende Verbindung (46) intakt bleibt und die eine oder die mehreren brechbaren Stege (55) gebrochen werden,
wobei bei der axialen Kompressionswirkung die mindestens eine Lasche (45) des Stopfens (40) in die jeweilige Längsnut (64) eintritt und entlang der Längsnut gleitet, bis sich der Stopfen in der Bohrung (62) an oder nahe dem oberen Ende des Kappenkörpers (60) befindet und die axialen Verriegelungsstrukturen (47, 67) zusammenwirken, um den Stopfen und den Kappenkörper in axialer Richtung zu verriegeln.

14. Verfahren nach Anspruch 13, wobei die einstückige Komponente (1) durch Spritzgießen in einer Spritzgussform hergestellt wird, und wobei die axiale Kompressionswirkung durchgeführt wird, bevor die Verschlussanordnung (100) aus der Spritzgussform ausgeworfen wird.

15. Verfahren nach Anspruch 13 oder 14, wobei die einstückige Komponente (1) mit einem integrierten Band (90) hergestellt wird, das einstückig, z. B. geformt, aus einem Kunststoffmaterial mit dem Einsatz und mit dem Kappenkörper als genau ein Stück ausgebildet ist, wobei das Band ein erstes Ende aufweist, das mit dem Einsatz verbunden ist, und ein zweites Ende, das mit dem Kappenkörper verbunden ist, und wobei das Band (90) ausgelegt ist, das Kappenteil nach erstmaligem Öffnen der Verschlussanordnung mit dem Einsatz verbunden zu halten, vorzugsweise wobei das Band ein gelenkiges Band (90) ist, das mehrere Bandabschnitte (92, 94, 96) umfasst, die in Reihe durch ein oder mehrere Scharniere miteinander verbunden sind, und wobei das Band aufgrund der Kompressionswirkung gefaltet wird, indem sich die Bandabschnitte um das eine oder die mehreren Scharniere falten, wobei beispielsweise sich nach Abschluss der Kompressionswirkung der erste Bandabschnitt (92) parallel zur Hauptachse erstreckt, der zweite Bandabschnitt (94) sich senkrecht zur Hauptachse vom Kappenkörper weg erstreckt und der dritte Bandabschnitt (96) sich entlang des zweiten Bandabschnitts erstreckt.

## Revendications

1. Ensemble de fermeture (100) comprenant :
- un ensemble bec verseur (10) monolithique réalisé, par exemple moulé par injection, en matière plastique, lequel ensemble bec verseur comprend :
- une partie base (20) conçue pour être fixée ou fixée à un corps de récipient,
- un col tubulaire (30) autour d'un passage (31) de produit, lequel col tubulaire s'étend à partir de la partie base selon un axe principal (5) et forme une bouche au niveau d'une extrémité supérieure du col tubulaire permettant la distribution de produit à partir du corps de récipient,
- un bouchon (40) réalisé d'un seul tenant avec l'extrémité supérieure du col tubulaire (30), le bouchon comprenant une partie d'étanchéité (42), et le bouchon étant relié par un raccord périphérique frangible (46) au col (30) de sorte à fermer le passage de produit,
- un corps de capuchon (60) réalisé, par exemple moulé par injection, en matière plastique, le corps de capuchon comportant une partie jupe (61) définissant un alésage à extrémités ouvertes (62) s'étendant depuis une ouverture inférieure au niveau d'une extrémité inférieure du corps de capuchon jusqu'à une ouverture supérieure au niveau d'une extrémité supérieure du corps de capuchon,
le corps de capuchon (60) étant monté sur le col tubulaire (30) et sur le bouchon (40) de sorte que le bouchon se trouve dans l'alésage (62) au niveau ou près de l'extrémité supérieure du corps de capuchon et que la partie jupe (61) s'étende autour du col tubulaire,
le bouchon (40) et le corps de capuchon (60) étant pourvus de parties conformées de verrouillage coopérantes conçues pour verrouiller le bouchon et le corps de capuchon dans des directions axiale et de rotation,
l'ensemble de fermeture (100) étant conçu pour permettre une première ouverture par l'utilisateur venant en contact avec le corps de capuchon (60) et amenant le raccord périphérique frangible (46) à rompre de sorte que le bouchon et le corps de capuchon forment alors une partie capuchon (70) et de sorte que le passage (31) de produit soit ouvert,
et la partie capuchon (70) pouvant être replacée par l'utilisateur sur le col tubulaire dans une position refermée de celui-ci, la partie d'étanchéité (42) du bouchon étant introduite dans une section supérieure du col tubulaire (30) et venant en prise étanche avec le col tubulaire de sorte à fermer le passage de produit, **caractérisé en ce que**
la partie jupe (61) du corps de capuchon présente une nervure longitudinale (63) en saillie vers l'extérieur s'étendant parallèlement à l'axe principal (5),
l'alésage (62) du corps de capuchon comprenant une rainure longitudinale (64) s'étendant parallèlement à l'axe principal (5), la rainure longitudinale étant partiellement située à l'intérieur de la nervure longitudinale (63),
le bouchon (40) présentant une languette (45) faisant saillie vers l'extérieur, la languette étant reçue dans la rainure longitudinale (64), la languette et la rainure coopérant pour fournir un verrouillage en rotation du bouchon (40) et du corps de capuchon (60),
et le bouchon et le corps de capuchon étant en outre pourvus de parties conformées (47, 67) de verrouillage axial coopérantes, distinctes de la languette et de la rainure (45, 64), lesquelles parties conformées (47, 67) de verrouillage axial étant conçues pour verrouiller le bouchon et le corps de capuchon dans des directions axiales.

2. Ensemble de fermeture selon la revendication 1, le corps de capuchon (6) comportant deux parties aile (65) diamétralement opposées qui s'étendent vers l'extérieur depuis la jupe,
la partie jupe du corps de capuchon présentant deux nervures longitudinales (63) en saillie vers l'extérieur s'étendant parallèlement à l'axe principal et diamétralement opposées,
chaque partie aile (65) étant d'une seule pièce avec une nervure longitudinale (63) correspondante,
l'alésage du corps de capuchon comprenant deux rainures longitudinales (64) diamétralement opposées s'étendant parallèlement à l'axe principal, chaque rainure longitudinale étant partiellement située à l'intérieur d'une nervure longitudinale respective parmi les deux nervures longitudinales (63),
le bouchon (40) présentant deux languettes (45) diamétralement opposées et
faisant saillie vers l'extérieur, chaque languette étant reçue dans une rainure longitudinale respective parmi les deux rainures longitudinales (64), les languettes et rainures coopérant pour fournir un verrouillage rotatif du bouchon et du corps de capuchon.

3. Ensemble de fermeture selon la revendication 1 ou 2, le moyen de verrouillage axial étant réalisé par une ou plusieurs parties conformées (47) d'encliquetage faisant saillie vers l'extérieur du bouchon, distinctes de ladite au moins une languette (45), et une ou plusieurs parties conformées (67) d'encliquetage complémentaires du corps de capuchon de sorte à fournir un verrouillage axial du bouchon et du corps de capuchon, par exemple le bouchon (40) présentant deux parties conformées (47) d'encliquetage diamétralement opposées et faisant saillie vers l'extérieur, par exemple perpendiculaires aux languettes (45) dans un mode de réalisation selon la revendication 2, et le corps de capuchon étant pourvu de fenêtres (67) diamétralement opposées s'étendant à partir de l'alésage (62) à travers le corps de capuchon.

4. Ensemble de fermeture selon l'une quelconque ou plusieurs des revendications 1 à 3, le corps de capuchon étant pourvu d'une partie collerette (66) faisant saillie vers l'extérieur et fusionnant avec l'au moins une nervure longitudinale (63), par exemple dans un mode de réalisation selon la revendication 3, la ou les parties conformées (67) d'encliquetage complémentaires du corps de capuchon étant réalisées sous la forme d'une ou de plusieurs fenêtres (67) s'étendant depuis l'alésage (62) à travers la partie collerette (66) du corps de capuchon, une partie conformée (47) d'encliquetage correspondante du bouchon étant reçue dans chaque fenêtre (67), par exemple le bouchon présentant deux parties conformées (47) d'encliquetage diamétralement opposées et faisant saillie vers l'extérieur et le corps de capuchon étant pourvu de fenêtres (67) diamétralement opposées s'étendant depuis l'alésage à travers la partie collerette du corps de capuchon.

5. Ensemble de fermeture selon l'une quelconque ou plusieurs des revendications 1 à 4, le bouchon présentant une partie paroi transversale (41), la partie d'étanchéité (42) étant une partie d'étanchéité annulaire faisant saillie vers le bas depuis la partie paroi transversale, et le bouchon présentant en outre une partie paroi supérieure annulaire (43) faisant saillie vers le haut depuis la partie paroi transversale (41), le raccord périphérique frangible (46) étant adjacent à un bord inférieur de la partie d'étanchéité annulaire (42) du bouchon, par exemple la partie paroi supérieure annulaire (43) étant adjacente à une périphérie de la partie paroi transversale (41) et la partie d'étanchéité annulaire ayant une section transversale inférieure à celle de la partie paroi transversale (41) et de la partie paroi supérieure annulaire.

6. Ensemble de fermeture selon l'une quelconque ou plusieurs des revendications 1 à 5, le corps de capuchon (60) présentant un bord inférieur définissant deux évidements (75) diamétralement opposés, chaque évidement définissant une paire de côtés inclinés (76) qui s'étendent avec des inclinaisons opposées depuis une face inférieure du corps de capuchon vers le haut jusqu'à un sommet de l'évidement, et l'ensemble bec verseur (10) présentant deux parties rampe (80) diamétralement opposées, par exemple au niveau ou à proximité d'une extrémité inférieure du col tubulaire (30), par exemple faisant saillie vers le haut depuis la partie base (20), lesquelles parties rampe (80) présentant chacune des côtés inclinés, et les parties rampe (80) et les évidements (75) sur le bord inférieur du corps de capuchon étant complémentaires de sorte que, en position refermée de la partie capuchon (70), chaque partie rampe (80) se trouve dans un évidemment correspondant parmi les deux évidements (75), et lorsque l'utilisateur fait tourner la partie capuchon (70) dans sa position refermée, les côtés inclinés coopérants des évidements (75) et des parties rampes (80) provoquant une action de soulèvement de la partie capuchon par rapport au col tubulaire.

7. Ensemble de fermeture selon l'une quelconque ou plusieurs des revendications 1 à 6, le col tubulaire (30) étant pourvu d'au moins un bourrelet circonférentiel (32, 33), par exemple deux bourrelets circonférentiels espacés axialement, l'au moins un bourrelet circonférentiel (32, 33) étant conçu pour venir en prise par friction avec l'intérieur du corps de capuchon.

8. Ensemble de fermeture selon l'une quelconque ou plusieurs des revendications 1 à 7, la partie capuchon (70) et le col tubulaire (30) étant conçus pour fournir un joint par encliquetage lorsque la partie capuchon est dans sa position refermée, par exemple seulement dans sa position refermée, par exemple les restes du raccord périphérique frangible (46) sur le col tubulaire formant un joint par encliquetage avec le bouchon, par exemple, dans un mode de réalisation de la revendication 5 avec la partie d'étanchéité annulaire (42) du bouchon (40).

9. Ensemble de fermeture selon l'une quelconque ou plusieurs des revendications 1 à 8, l'ensemble de fermeture comprenant en outre une sangle (90) intégrée, de préférence comprenant une seule sangle intégrée, qui est réalisée, par exemple moulée, d'un seul tenant avec l'ensemble bec verseur (10) et avec le corps de capuchon (60) comme une seule pièce en une matière plastique,
la sangle (90) présentant une première extrémité reliée à l'ensemble bec verseur (10) et une seconde extrémité reliée au corps de capuchon (60), et la sangle étant conçue pour maintenir la partie capuchon reliée à l'ensemble bec verseur après la première ouverture de l'ensemble de fermeture, par exemple la première extrémité étant reliée à la partie base (20) de l'ensemble bec verseur, à distance du col tubulaire, par exemple la seconde extrémité de la sangle étant reliée à une partie aile (65) du corps de capuchon, de préférence la sangle (90) étant une sangle articulée comprenant plusieurs segments de sangle (92, 94, 96) reliés en série par une ou plusieurs charnières (93, 94).

10. Ensemble de fermeture selon la revendication 9, la sangle étant une sangle (90) articulée comprenant un premier segment de sangle (92) relié à l'ensemble bec verseur, par exemple à la partie base (20), par l'intermédiaire d'une première charnière (91), un deuxième segment de sangle (94) relié au premier segment de sangle par l'intermédiaire d'une deuxième charnière (93), un troisième segment de sangle (96) relié au deuxième segment de sangle par l'intermédiaire d'une troisième charnière (5), et le troisième segment de sangle (96) étant relié au corps de capuchon (60) par l'intermédiaire d'une quatrième charnière (97), les charnières (91, 93, 95, 97) définissant des axes d'articulation parallèles, de préférence la sangle (90) étant conçue de sorte que, dans la position refermée de la partie capuchon (70), le premier segment de sangle (92) s'étende parallèlement à l'axe principal (5), le deuxième segment de sangle (94) s'étende perpendiculairement à l'opposé du corps de capuchon, et le troisième segment de sangle (96) s'étende le long du deuxième segment de sangle.

11. Ensemble de fermeture selon l'une quelconque ou plusieurs des revendications 1 à 10, la partie base (20) de l'ensemble bec verseur (10) étant réalisée avec une partie d'étanchéité en forme de nacelle conçue pour être fixée ou fixée entre des parois de film opposées d'un récipient sachet pliable, ou la partie base de l'ensemble bec verseur étant réalisée avec une partie bride circonférentielle inférieure conçue pour être fixée ou fixée à un panneau d'un récipient, par exemple un panneau d'un carton ou à une paroi d'un sachet pliable.

12. Récipient muni d'un ensemble de fermeture (100) selon l'une quelconque ou plusieurs des revendications 1 à 11, par exemple un récipient sachet pliable ou un carton.

13. Procédé de production d'un ensemble de fermeture (100) selon l'une quelconque ou plusieurs des revendications 1 à 11, dans lequel procédé :
- un élément monolithique (1) est réalisé, par exemple moulé par injection, en matière plastique, lequel élément monolithique est composé à la fois de l'ensemble bec verseur (10) et du corps de capuchon (60), l'extrémité inférieure du corps de capuchon (60) étant reliée d'un seul tenant au bouchon (40) par l'intermédiaire d'un ou de plusieurs ponts sécables (55) et le corps de capuchon (60) s'étendant à l'opposé du bouchon (40) selon l'axe principal (5) opposé au col tubulaire (30),
l'élément (1) étant ultérieurement soumis à une action de compression axiale pour obtenir l'ensemble de fermeture (100), action de compression axiale dans laquelle le corps de capuchon (60) est forcé vers la partie base (20) de l'ensemble bec verseur (10) de sorte que le raccord périphérique frangible (46) reste intact et que le ou les ponts cassables (55) soient rompus,
dans l'action de compression axiale, l'au moins une languette (45) du bouchon (40) entrant dans la rainure longitudinale (64) respective et coulissant à travers la rainure jusqu'à ce que le bouchon soit situé dans l'alésage (62) au niveau ou près de l'extrémité supérieure du corps de capuchon (60) et les parties conformées (47, 67) de verrouillage axial coopèrent pour verrouiller le bouchon et le corps de capuchon dans des directions axiales.

14. Procédé selon la revendication 13, l'élément monolithique (1) étant fabriqué par moulage par injection dans un moule d'injection, et l'action de compression axiale étant effectuée avant que l'ensemble de fermeture (100) ne soit éjecté hors du moule d'injection.

15. Procédé selon la revendication 13 ou 14, l'élément monolithique (1) étant réalisé avec une sangle intégrée (90) qui est réalisée, par exemple moulée, d'un seul tenant avec l'ensemble bec verseur et avec le corps de capuchon en une seule pièce d'une matière plastique, laquelle sangle présentant une première extrémité reliée à l'ensemble bec verseur et une seconde extrémité reliée au corps de capuchon, et laquelle sangle (90) étant conçue pour maintenir la partie capuchon reliée à l'ensemble bec verseur après la première ouverture de l'ensemble de fermeture, de préférence la sangle étant une sangle articulée (90) comprenant plusieurs segments de sangle (92, 94, 96) réunis en série par une ou plusieurs charnières, et la sangle étant pliée sous l'effet de la compression lorsque les segments de sangle se plient autour de la ou des charnières, par exemple le premier segment de sangle (92) s'étendant parallèlement à l'axe principal, le deuxième segment de sangle (94) s'étendant perpendiculairement à l'axe principal à l'opposé du corps de capuchon, et le troisième segment de sangle (96) s'étendant le long du deuxième segment de sangle après l'action de compression.
